# EUROPEAN PATENT SPECIFICATION

(11) **EP 2 832 560 B1**
(45) Date of publication and mention of the grant of the patent: **24.06.2020**
(21) Application number: 12873269.0
(22) Date of filing: 31.08.2012
(51) Int. Cl.: B60C 17/04, B60B 21/12

(54) **PUNCTURE COPING WHEEL**
REIFEN MIT DURCHSTECHABDECKUNG
ROUE ANTI-CREVAISON

(30) Priority: 28.03.2012 JP 2012074233
(43) Date of publication of application: 04.02.2015
(73) Proprietor: Fujimoto, Hiromichi, Beppu-shi, Oita 874-0011 (JP)
(72) Inventor: Fujimoto, Hiromichi, Beppu-shi, Oita 874-0011 (JP)
(74) Representative: Isarpatent
(86) International application number: PCT/JP2012/072233
(87) International publication number: WO 2013/145366

(56) References cited:
- EP-A1- 0 020 150
- EP-A1- 2 117 850
- WO-A1-03/106198
- WO-A1-2011/010536
- JP-A- 2005 028 888
- JP-B2- S 567 885
- JP-B2- S 589 003
- US-A- 5 988 244
- US-A1- 2011 315 287

## Description

### BACKGROUND OF THE INVENTION

The present invention relates to a wheel for coping with a tire puncture.

The following paragraphs [0003] to [0017] will describe a conventional wheel for coping with a tire puncture.

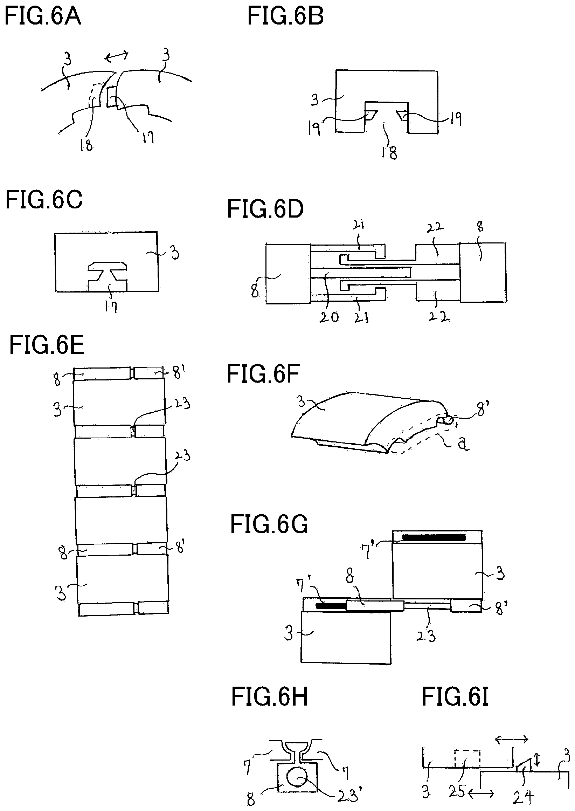

For a tire support used during a tire puncture that is inserted into a space surrounded by a tire and a wheel rim according to Japanese Patent No. 4102981, the "Description of Embodiments" describes that "In Fig. 6, ... the space between the 1' is supported by indented ridges 17 that serve as a support on the right and left, under the 1' near the 4 ...", and also describes that the structure that serves as a support for (45) is supported on the right and left of the wheels.

Furthermore, the "Description of Embodiments" in Japanese Patent No. 4102981 describes that "In Fig. 6", thereafter, " The wheel has no unit 12, or has a ring shape joined with one unit 12, such that the unit that works as 17 is configured to be near the dotted part 16 to form the wheel according to claim 2, and a wheel in which unit 17 is formed as one part with the right and left ring, and the earlier-described unit 12 separates and joins midway in the direction in which 2 is connected forms the wheel according to claim 1.", and also describes that the structure for support can be made with the same material as the wheel.

According to Kojien (Japanese dictionary published by Iwanami), "support" means "supporting and holding the state while being in contact with an object, and also implies a pillar or a bar used for support. Prop. Strut".

From the above [0003] to [0005], it is understood that the structure for support in the tire support includes plate-like or bar-like structures that can be fixed by wheels on the right and left.

The description of Japanese Published Unexamined Patent Application No. 2005-313690 (page 3, line 40 to 45 of the publication) states that a run-flat tire support is a circular run-flat tire support attached to the rim in a run-flat tire, and includes a base unit configured by closed cell resin foam, and a reinforcing unit provided on the outer circumference surface of the base unit, and the reinforcing unit is configured by a resin layer and a cord layer formed inside the resin layer and made of a cord member wound in a tire circumferential direction, and on an inner circumference surface of the resin layer, a concave groove that extends in a direction crossing the tire circumferential direction is formed, however, it can be considered that the cord member described in Japanese Published Unexamined Patent Application No. 2005-313690 does not perform the role of the structure for support that is described in Japanese Patent No. 4102981.

Furthermore, according to Japanese Published Unexamined Patent Application No. 2005-313690, because the tire support cannot be divided in a direction perpendicular to the axle shaft, the tire support is inserted inside the tire after deformation, and since the height of the tire support cannot be set to be too high in view of the elastic force of the tire support, the diameter at the time of supporting the tire changes significantly, and as described in Japanese Published Unexamined Patent Application No. 2005-313791 below, a large gap occurs between the tire support and the tire inner surface, and frictional heat is expected to occur easily due to the tire inner part and tire support.

In the description of Japanese Published Unexamined Patent Application No. 2007-055399 (page 4, line 8 to 11 of the publication), a wheel 1 for a tire has a support core 3 that protrudes to the outer side in the radial direction of a rim 2. The rim and the support core are separately divided into a plurality in the circumferential direction, and after each sector of the support core has been linked, the sectors of the rim are embedded into the inner circumference of the sector, and each sector is fixed so that it can be inserted and removed from an axle shaft through a circular disc, and it is understood that at the time of a tire puncture, the tire support is of a type that each support divides and the divided tire support is inserted individually into inside the tire and linked, and since the joints at the side of the tire that are positioned in the outer circumferential side of the tire support are separated, they are not always contacted uniformly to the tire.

Also, because the tire supports are not of the type in which the tire supports are inserted or removed by the rotational movement of the shaft while keeping the circumferential length, the tire supports enter inside the inner space of the tire by more than the diameter at the side of the wheel at the time of mounting. Therefore, the insertion and removal of the tire supports becomes difficult.

In Japanese Published Unexamined Patent Application No. 2003-341311, while each tire support is divided, the shape is such that a level difference can occur in the joints with respect to the circumference of the tire support, therefore, contact cannot be established with the tire support under the same type of conditions at all times.

According to Japanese Published Unexamined Patent Application No. 2008-68857, since the tire supports are not inserted or removed by performing the rotational movement of the shaft, the tire supports cannot be inserted or removed unless the space between the tire supports is widened inside the tire, and the height of the tire supports cannot be set too high, and therefore, frictional heat occurs easily between the tire and the tire support at the time of running during a puncture.

Conventionally, for example, a mousse tire has a structure in which mousse is inserted in the space enclosed by the tire and the wheel rim from the space between the tire and the wheel by using a special device after the tire has been mounted on the wheel, which requires effort, and a linking mechanism does not exist in the divided portion where the ring-shaped mousse are jointed; and also, for example, a clincher tire has a structure in which a ring-shaped tube filled with air is inserted inside the outer tire, and there has been a tire in which a hollow ring-shaped structure is inserted in the space enclosed by the tire and the wheel rim.

According to Japanese Published Unexamined Patent Application No. 2003-341311, the distance between the joints of blocks that support the tire is wide, and all hooks for linking the blocks form integrally with the support, and there have been limitations in the shape of the tire support, as the large portion of the tire support that supports the tire must be inserted together with the linking part into inside the space enclosed by the tire and rim.

According to Japanese Published Unexamined Patent Application No. 2008-68857, the male joining member and the female joining member of a tire support are provided integrally with the tire support portion of the tire support, and therefore, a similar problem as described in the above paragraph [0013] occurred.

According to Japanese Published Examined Patent Application No. S56-7885, a contact support (13) and a support (14) are formed integrally, and each block is assembled in the same shape to form a ring shape, and therefore, a similar problem as described in the above paragraph [0013] occurred.

According to Japanese Published Examined Patent Application No. S58-9003, because the tire support is separate from the ring-shaped flat protector as described in the above paragraph [0015], and a flap (30) and plate member (24) form integrally, it is understood that the height of the tire support cannot be set high as described in the above [0015].

According to Japanese Published Unexamined Patent Application No. 2005-170379 and Japanese Published Unexamined Patent Application No. 2002-200906, the tire support is one of the structures of which the shape or role has been changed as compared to the conventional structure described in the above paragraph [0012], and which is inserted in the space enclosed by the tire and the wheel rim, and furthermore, Japanese Published Unexamined Patent Application No. 2005-170379 and Japanese Published Unexamined Patent Application No. 2002-200906 are applications about the cross-section in a direction parallel to the axle shaft of the tire support, and it is understood that they do not indicate a structure in which the height of the tire support can be increased up to the height of the tire inner wall in the space inside the tire.

The conventional tire support used during a tire puncture had several problems, such as restrictions imposed on the size of the tire support due to the fact that a tire support portion cannot be deformed at the side of an axle shaft, low linkage strength of the tire support portions toward the external force in various directions due to the fact that the tire support portions are not fixed by the shaft in the axle shaft direction and a hole in which the shaft is inserted, inconvenient use of tire support, and difficulty in supporting the tire at all times due to a large gap in the joints between the tire supports.

The tire support according to the present invention that is used during a tire puncture can be used even when the size of the contact portion of the outer diameter of the tire support is of a size close to the outer diameter of the space in the inner side of the tire, therefore the contact portion between the tire used when the tire support is used, and the tire support, can be always or almost always supported, the linkage strength between the tire support portions can be kept, the tire support can be used easily, and therefore, an object of the present invention is to use a tire support in which the level difference generated due to the gap in the joints between the tire supports is reduced.

JP 2005 028888 A, US 5 988 244 A and WO 03/106198 A1 further describe tires and devices for installation of tires.

### SUMMARY OF THE INVENTION

In order to realize the above purpose, the present invention provides a tire support used during a tire puncture with the features of claim 1.

A tire support that is used during a tire puncture according to the present invention is characterized in that the inclusion of a mechanism for installation and removal of the divided tire support portions (3) in which turned-back parts (83, 84) of the guide for sliding have been removed, in the guide for sliding that performs a back and forth motion for the purpose of linking by sliding in the direction that is parallel or almost parallel to the axle shaft, as described in the above paragraph [0022].

A tire support that is used during a tire puncture according to the present invention is characterized in that grips (94, 92') or a groove (92) or hole for gripping is included, in the surface, facing the side of the axle shaft, of the tire support (3) during a tire puncture, as described in the above paragraphs [0022] and [0023].

A tire support that is used during a tire puncture according to the present invention is characterized in that the tire support that is used during a tire puncture, which is described in the above paragraph [0022], where one of the tire circumferential directions of the tire support portions (3) of the divided tire support, as described in the above paragraph [0022], is a joint of the divided tire support portions (3), as described in the above paragraph [0022], in the joint for linking the tire support portions (3) configured at the side opposite, in the tire circumferential direction, of the joints between the above-described divided tire support portions, wherein another joint that is opposite the joint described in the above paragraph [0022] with respect to the tire circumferential direction in any one of the divided tire support portions (3X) of the tire support (3) includes an arm (61) for linking the tire support portions that is made of a pillar or a plate having a rotational axis in which a shaft around which a rotational movement is performed, the shaft being installed in a direction parallel to the axle shaft or in a direction that is almost parallel to the axle shaft, alternatively, another joint that is opposite the joint described in the above paragraph [0022] with respect to the tire circumferential direction in any one of the divided tire support portions (3X) of the tire support (3) includes a projection (65) for linking the tire support portions (X) and the tire support portions (Y) through the rotational movement of the tire support portions (3X) or the tire support portions (3Y) that are adjacent to (3X) around a shaft installed in a direction parallel to the axle shaft or a direction that is almost parallel to the axle shaft, and in the adjacent divided tire support portion (3Y) that is linked with the divided tire support portion (3X), there is included a space (66) made of a hole or a groove for fixing, where insertion or linkage is performed for linking with the joint of the arm (61) or the projection (65) for the purpose of linking the tire support portions.

A tire support that is used during a tire puncture according to the present invention is characterized in that the tire support that is used during a tire puncture, which is described in the above paragraph [0022], where one of the tire circumferential directions of the tire support portions (3) of the divided tire support, as described in the above paragraph [0022], is a joint of the tire support portions (3), as described in the above paragraph [0022], in the joint for linking the tire support portions (3) configured at the side opposite, in the tire circumferential direction, of the joints between the above-described divided tire support portions, wherein another joint that is opposite the joint described in the above paragraph [0022] in any one of the divided tire support portions (3X) of the tire support (3) includes an arm (102) for linking the tire support portions that is made of a pillar or a plate having a rotational axis (101) in which a shaft around which a rotational movement is performed, the shaft being installed in a direction perpendicular to the axle shaft or in a direction that is almost perpendicular to the axle shaft, and in the adjacent divided tire support portion (3Y) that is linked with the divided tire support portion (3X), there is included a space (104) made of a hole or a groove for fixing, where insertion or linkage is performed for linking with the joint of the arm for the purpose of linking the tire support portions.

A tire support that is used during a tire puncture according to the present invention is characterized in that the tire support that is used during a tire puncture, which is described in the above paragraph [0022], where one of the tire circumferential directions of the tire support portions (3) of the divided tire support, as described in the above paragraph [0022], is a joint of the tire support portions (3), as described in the above paragraph [0022], in the joint for linking the tire support portions (3) configured at the side opposite, in the tire circumferential direction, of the joints between the above-described divided tire support portions, wherein another joint that is opposite the joint described in the above paragraph [0022] in any one of the divided tire support portions (3X) of the tire support (3) includes a guide (99') for sliding in a direction parallel to the tire circumferential direction or a direction that is almost parallel to the tire circumferential direction, and an arm (87) for linking the tire support portions that is made of a movable pillar or a plate installed in the guide (99') for sliding, and in the adjacent divided tire support portion (3Y) that is linked with the divided tire support portion (3X), there is included a space (99) made of a hole or a groove for fixing, where insertion or linkage is performed for linking with the joint of the arm (98) for the purpose of linking the tire support portions.

The wheel for coping with a tire puncture according to the present invention is characterized in that the inclusion of an indented structure portion (59) used for the purpose of sandwiching and fixing the tire support during a tire puncture as described in the above paragraphs [0022] to [0024], on the circumference that is either perpendicular or substantially perpendicular to the axle shaft at the side of the tire of the wheel rim or wheel disc.

An effect of the above-described paragraph [0022] is that the tire support used during a tire puncture is characterized in that a ring-shaped tire support used for the support as the wheel that is brought in contact with the inner surface of a punctured tire in the ring-shaped space enclosed by the tire and wheel rim of the wheel, such that the ring-shaped tire support used during a tire puncture is configured by tire support portions (3) formed by dividing the ring into two or more units, and joints that link the divided tire support portions, and in the tire support used during a tire puncture that takes the shape of a ring by linking between the divided tire support portions (3), the joints that link the divided tire support portions (3) include a rotational axis for linking the tire support portions that is made of the shafts (10, 21, 22) installed in a direction parallel to the axle shaft or in a direction that is almost parallel to the axle shaft for the purpose of keeping the distance between adjacent divided tire support portions, and for rotational movement of the tire support portions; and a guide for sliding that performs a back and forth motion and is made of a groove-shaped guide for rail (7) and a projection-shaped linking unit (8) for linking and sliding that has a shape which fits into the groove-shaped guide for rail, which are provided for the purpose of moving and fixing the adjacent divided tire support portions (3) in a direction parallel to the axle shaft or in a direction that is almost parallel to the axle shaft, and can be installed in a direction parallel to the axle shaft or in a direction that is almost parallel to the axle shaft; or a guide for sliding that performs a back and forth motion and is made of a pillar-shaped guide for rail (5) and a hole-shaped linking unit (4) for linking and sliding that has a shape which fits into the pillar-shaped guide for rail, which are provided for the purpose of moving and fixing the adjacent divided tire support portions (3) in a direction parallel to the axle shaft or in a direction that is almost parallel to the axle shaft, and can be installed in a direction parallel to the axle shaft or in a direction that is almost parallel to the axle shaft, and as a result of this characteristic, individual tire support portions having a high height can be inserted sequentially and continuously in the space enclosed by the tire and the wheel, and in the state while the tire is laid down, the tire support portions can be inserted one by one into the tire.

An effect in the above-described paragraph [0023] is that, because the tire support used during a tire puncture includes a mechanism for installation and removal of the divided tire support portions (3) in which the (83, 84) where turned-back parts of the guide for sliding have been removed, in the guide for sliding that performs a back and forth motion for the purpose of linking by sliding in the direction that is parallel or almost parallel to the axle shaft, as described in the above paragraph [0022], after a tire support portion has been inserted while the tire is in a laid-down state, the following tire support portions can be inserted to be linked to the previous tire support portion from above, that is, in a way so as to slide in the direction parallel to the axle shaft.

An effect in the above-described paragraph [0024] is that, because the tire support used during a tire puncture includes grips (94, 92'), or a groove (92) or hole for gripping in the surface facing the side of the axle shaft, of the tire support (3) during a tire puncture, as described in the above paragraphs [0022] and [0023], it is possible to hold the grip of the tire support from the tire while the tire is in a laid-down state.

An effect in the above-described paragraph [0025] is that, a tire support that is used during a tire puncture according to the present invention is characterized in that the tire support that is used during a tire puncture, which is described in the above paragraph [0022], where one of the tire circumferential directions of the tire support portions (3) of the divided tire support, as described in the above paragraph [0022], is a joint of the tire support portions (3), as described in the above paragraph [0022], in the joint for linking the tire support portions (3) configured at the side opposite, in the tire circumferential direction, of the joints between the above-described divided tire support portions, wherein another joint that is opposite the joint described in the above paragraph [0022] with respect to the tire circumferential direction in any one of the divided tire support portions (3X) of the tire support (3) includes an arm (61) for linking the tire support portions that is made of a pillar or a plate having a rotational axis in which a shaft around which a rotational movement is performed, the shaft being installed in a direction parallel to the axle shaft or in a direction that is almost parallel to the axle shaft, alternatively, another joint that is opposite the joint described in the above paragraph [0022] with respect to the tire circumferential direction in any one of the divided tire support portions (3X) of the tire support (3) includes a projection (65) for linking the tire support portions (X) and the tire support portions (Y) through the rotational movement of the tire support portions (3X) or the tire support portions (3Y) that are adjacent to the (3X) around a shaft installed in a direction parallel to the axle shaft or a direction that is almost parallel to the axle shaft, and in the adjacent divided tire support portion (3Y) that is linked with the divided tire support portion (3X), there is included a space (66) made of a hole or a groove for fixing, where insertion or linkage is performed for linking with the joint of the arm (61) or the projection (65) for the purpose of linking the tire support portions, and as a result of this characteristic, the arm or projection for linking that is present in one of the divided tire support portions is inserted and fixed inside an adjacent divided tire support portion, or the arm or projection is fixed with a fastener so that the arm or projection for linking can be fixed in the tire support portion.

An effect described in the above paragraph [0026] is that, a tire support that is used during a tire puncture according to the present invention is characterized in that the tire support that is used during a tire puncture, which is described in the above paragraph [0022], where one of the tire circumferential directions of the tire support portions (3) of the divided tire support, as described in the above paragraph [0022], is a joint of the tire support portions (3), as described in the above paragraph [0022], in the joint for linking the tire support portions (3) configured at the side opposite, in the tire circumferential direction, of the joints between the above-described divided tire support portions, wherein another joint that is opposite the joint described in the above paragraph [0022] in any one of the divided tire support portions (3X) of the tire support (3) includes an arm (102) for linking the tire support portions that is made of a pillar or a plate having a rotational axis (101) in which a shaft around which a rotational movement is performed, the shaft being installed in a direction perpendicular to the axle shaft or in a direction that is almost perpendicular to the axle shaft, and in the adjacent divided tire support portion (3Y) that is linked with the divided tire support portion (3X), there is included a space (104) made of a hole or a groove for fixing, where insertion or linkage is performed for linking with the joint of the arm for the purpose of linking the tire support portions, and as a result of this characteristic, the arm for linking that is present in one of the divided tire support portions can be inserted and fixed inside an adjacent divided tire support portion, and the arm can be fixed with a fastener so that the arm for linking is fixed in the tire support portion.

An effect described in the above paragraph [0027] is that, a tire support that is used during a tire puncture according to the present invention is characterized in that the tire support that is used during a tire puncture, which is described in the above paragraph [0022], where one of the tire circumferential directions of the tire support portions (3) of the divided tire support, as described in the above paragraph [0022], is a joint of the tire support portions (3), as described in the above paragraph [0022], in the joint for linking the tire support portions (3) configured at the side opposite, in the tire circumferential direction, of the joints between the above-described divided tire support portions, wherein another joint that is opposite the joint described in the above paragraph [0022] in any one of the divided tire support portions (3X) of the tire support (3) includes a guide (99') for sliding in a direction parallel to the tire circumferential direction or a direction that is almost parallel to the tire circumferential direction, and an arm (87) for linking the tire support portions that is made of a movable pillar or a plate installed in the guide (99') for sliding, and in the adjacent divided tire support portion (3Y) that is linked with the divided tire support portion (3X), there is included a space (99) made of a hole or a groove for fixing, where insertion or linkage is performed for linking with the joint of the arm (98) for the purpose of linking the tire support portions, and as a result of this characteristic, the arm for linking that is present in one of the divided tire support portions can be inserted and fixed inside an adjacent divided tire support portion, and the arm can be fixed with a fastener so that the arm for linking is fixed in the tire support portion.

An effect in the above-described paragraph [0028] is that, because the wheel for coping with a tire puncture includes an indented structure portion (59) used for a purpose of sandwiching and fixing the tire support during a tire puncture as described in the above paragraphs [0022] to [0024], on the circumference that is either perpendicular or substantially perpendicular to the axle shaft at the side of the tire of the wheel rim or wheel disc, the periphery of the tire support according to the present invention can be fixed so as to be sandwiched from both the right and left sides.

According to a tire support according to the present invention, the individual tire support portions having a high height can be inserted sequentially and continuously in the space enclosed by the tire and the wheel, and in the state while the tire is laid down, the tire support portions can be inserted one by one into the tire, therefore, the tire support can be installed easily with the large components of the tire support inserted inside the tire without disassembling into individual units, thus enabling the use of the tire support close to the tire diameter and tire profile.

According to one of the characteristics of the tire support according to the present invention, after a tire support portion has been inserted while the tire is in a laid-down state, the following tire support portions can be inserted to be linked to the previous tire support portion from above, that is, in a way so as to slide in the direction parallel to the axle shaft, therefore, the tire support portions can be linked only from an arbitrary direction, thus enabling the tire support to be set up easily.

According to one of the characteristics of the tire support according to the present invention, it is possible to hold the grip of the tire support from the tire while the tire is in a laid-down state, therefore, the tire support can be pulled out easily from the tire.

According to one of the characteristics of the tire support according to the present invention, the arm or projection for linking that is present in one of the divided tire support portions is inserted and fixed inside an adjacent divided tire support portion, or the arm or projection is fixed with a fastener so that the arm or projection for linkage can be fixed in the tire support portion, therefore, the divided tire support portions can be fixed with each other.

According to one of the characteristics of the tire support according to the present invention, the arm for linking that is provided in one of the divided tire support portions is inserted and fixed inside an adjacent divided tire support portion, or the arm is fixed with a fastener so that the arm for linking can be fixed in the tire support portion, therefore, the divided tire support portions can be fixed with each other.

According to one of the characteristics of the tire support according to the present invention, the arm for linking that is provided in one of the divided tire support portions is inserted and fixed inside an adjacent divided tire support portion, or the arm is fixed with a fastener so that the arm for linking can be fixed in the tire support portion, therefore, the divided tire support portions can be fixed with each other.

According to one of the characteristics of the wheel for coping with a tire puncture according to the present invention, the periphery of the tire support according to the present invention can be fixed so as to be sandwiched from both the right and left sides, therefore, the tire support can be installed and removed easily from the wheel without having to widen the internal diameter of the tire support.

### BRIEF DESCRIPTION OF THE DRAWINGS

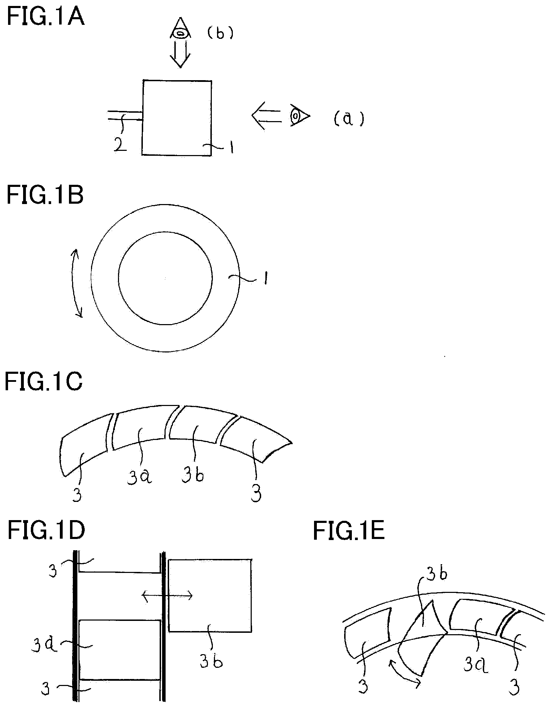

Fig. 1 is an example of a simplified diagram for explaining a tire support according to the present invention. Fig. 1A represents a diagram of an example of a wheel. Fig. 1B is a diagram in which Fig. 1A is seen from a direction that is parallel to the axle shaft. Fig. 1C is a simplified diagram that describes the parts when the divided tire support used during a tire puncture as described in the claims of the present invention is seen from the same direction as Fig. 1B. Fig. 1D is a simplified diagram that describes the parts when the (3b) of Fig. 1C is pulled out of the tire if the tire support used during a tire puncture that is to be divided. Fig. 1E shows an example of a simplified diagram of the tire support portion (3b) that performs a rotational movement through an axis that is parallel to the axle shaft after the (3b) of Fig. 1D is moved into the space inside the inner edges of the tire (1).

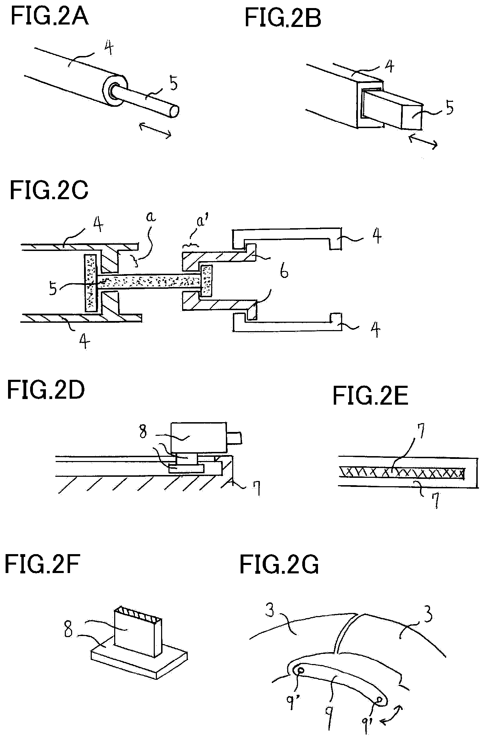

Fig. 2 is an example of a simplified diagram of a tire support linking portion according to claim 1 of the present invention. Fig. 2A shows a hole-type guide (4) in which a circular cylindrical shaft (5) forms a cylindrical inner-surface shape, and Fig. 2B shows a hole-type guide (4) in which a prismatic pillar (5) forms a square-shaped cylindrical inner-surface shape. Fig. 2C shows a simplified diagram of an example of a sliding guide for the back and forth motion according to claim 1. Fig. 2D, Fig. 2E, and Fig. 2F are examples of the simplified diagram of the sliding guide for the back and forth motion according to claim 1. Fig. 2G shows a simplified diagram of an example of an arm for linking according to claim 4 of the present invention.

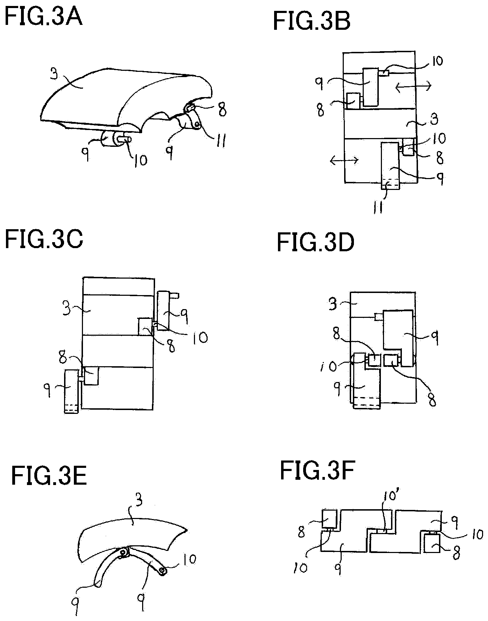

Fig. 3 is an example of a simplified diagram of a tire support according to claim 1 of the present invention. Fig. 3A shows a tire support portion. Fig. 3B is a simplified diagram in which Fig. 3A is seen from the side of the axle shaft. Fig. 3C is a diagram showing the state when the (8) and (9) of Fig. 3B are slid according to the condition of claim 1. Fig. 3D shows a guide that is different from the tire support portion of Fig. 3A, and moves the sliding shaft (8) in the right and left outer directions near the center of the (3). Fig. 3E is a simplified diagram in which Fig. 3D is seen from the side of the axle shaft. Fig. 3F is an example of a simplified diagram in which the arms for linking in separate adjacent tire support portions are linked.

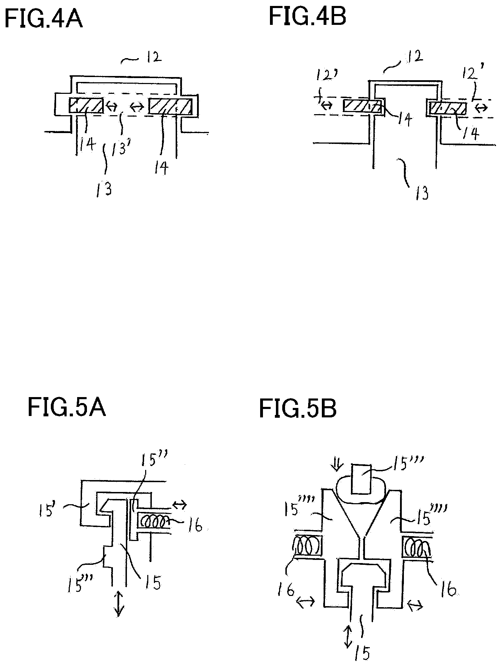

Fig. 4 is an example of a simplified diagram of a tire support component that can be employed in the present invention. Fig. 4A shows that the arm for linking (12) is linked through a projection (14) that slides and moves through the hole (13') provided in the arm for linking (13). Fig. 4B shows a plate-shaped or a projection-shaped stopper for fixing.
Fig. 5 is an example of a simplified diagram of a tire support portion that can be employed in the present invention. Fig. 5A is a figure showing that the linking and fixing unit (15) and the linking and fixing unit (15') are linking devices for linking and fixing the tire supports by being caught. Fig. 5B is a diagram of a linking device portion by which the (15''), which is configured by the spring (16) flares when the (15''') is slid in the direction of the arrow, and a stopper unit that fixes another fixing unit (15) also flares in the direction of the arrow.
Fig. 6 is an example of a simplified diagram of a tire support portion that can be employed in the present invention. Fig. 6A shows an example of a simplified diagram of a mechanism by which the tire supports can be attached to one another by performing a back and forth motion in the direction of the arrow. Fig. 6B shows a cross-sectional view of the (3) at the side of the (18) of Fig. 6A. Fig. 6C shows a cross-sectional view of the (3) at the side of the (17) of Fig. 6A. Fig. 6D is a simplified diagram of an example of a cross-section of a pillar-shaped sliding axis for back and forth motion according to claim 1. Fig. 6E shows an example of a simplified diagram when the side of the axle shaft of the tire support used during a tire puncture according to the present invention is seen from the side of the axle shaft in the circumferential direction of the wheel. Fig. 6F shows an example of a simplified diagram in which one tire support of Fig. 6E is seen from the outer circumference of the tire in an inclined direction. Fig. 6G indicates a diagram in which two lined-up tire supports according to Fig. 6E are seen from the same direction as Fig. 6E. Fig. 6H is a simplified diagram of an example of a cross-section of a guide that can be used in the present invention. Fig. 6I shows a simplified diagram of an example of a slide stopper between the tire support portions that is used to fix the tire support during a tire puncture.

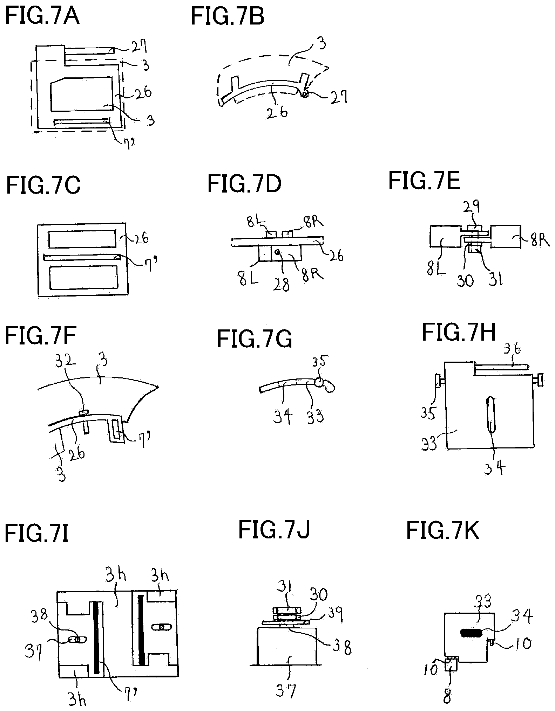

Fig. 7 is an example of a simplified diagram of a tire support portion that can be employed in the present invention. Fig. 7A shows an example of a plate for controlling deformation of the tire support inside the tire support portion (3) used during a tire puncture. Fig. 7B is a simplified diagram when Fig. 7A is seen from the side. Fig. 7C shows that a guide (7') for the (8) is provided near the center of the (26). Fig. 7D shows an example of the (8) that can be used in Fig. 7C. Fig. 7E is a diagram in which Fig. 7D is seen from the bottom. Fig. 7F shows a simplified diagram of an example of a tire support used during a tire puncture that can be used in the present invention. Fig. 7G shows a simplified diagram of an example of a plate for inserting in Fig. 7F. Fig. 7H is a diagram in which Fig. 7G is seen from above. Fig. 7I shows a simplified diagram of an example in which the tire support portion used during a tire puncture according to the present invention is seen from the side of the axle shaft. Fig. 7J shows an example of a simplified diagram in which a washer and nut are installed on the (37) and (38) of Fig. 7I when seen from the side. Fig. 7K shows an example of a simplified diagram of a plate that is mounted on Fig. 7I by the (8).

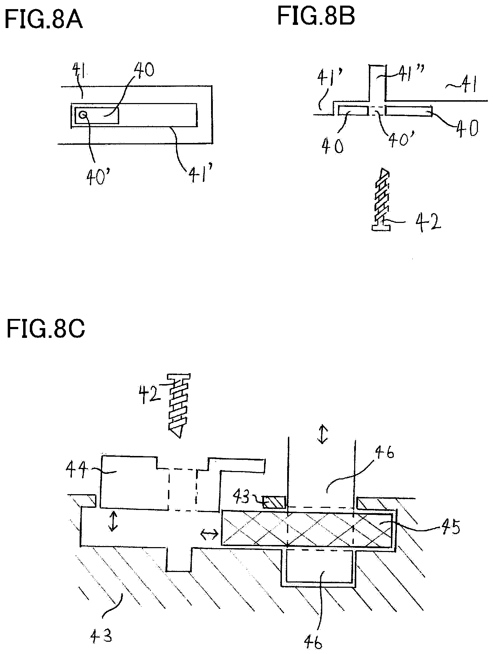

Fig. 8 is an example of a simplified diagram of a tire support portion that can be employed in the present invention. Fig. 8A is a top view of the fixing unit. Fig. 8B is a cross-sectional view of the portion near the fixing unit of Fig. 8A. Fig. 8C is a simplified diagram of an example of a method of fixing the tire support portion and the linking portion that can be used in the present invention.

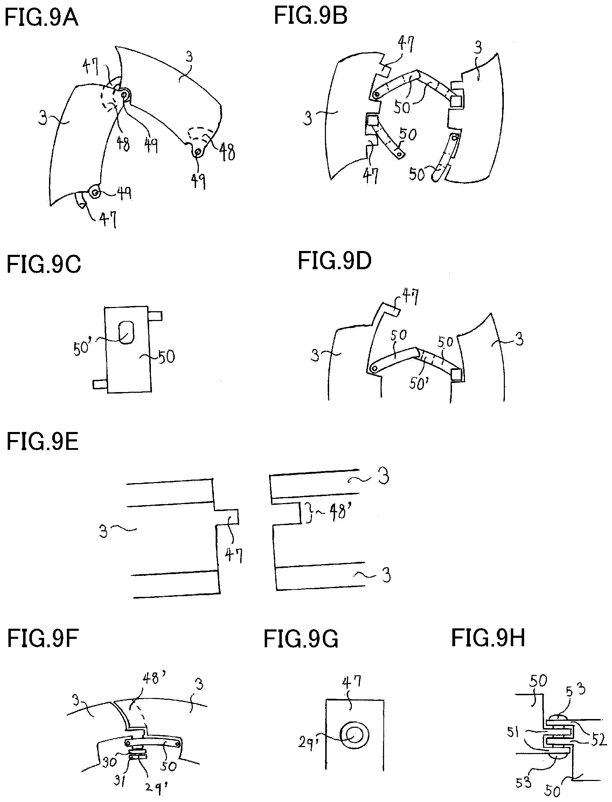

Fig. 9 is a simplified diagram of an example of a stopper mechanism of a tire support that can be employed in the present invention. Fig. 9A indicates that the tire support portion (3) is configured by a stopper for linking (47). Fig. 9B is a simplified diagram of an example of a stopper mechanism that can be used in the present invention. Fig. 9C shows a simplified diagram in which (50) of Fig. 9B are seen from the side of the axle shaft in the circumferential direction of the tire. Fig. 9D shows a simplified diagram of an example of a stopper mechanism of the tire support that can be used in the present invention. Fig. 9E shows an example of a simplified diagram in which Fig. 9D is seen from the side of the outer circumference of the tire in the direction of the side of the axle shaft. Fig. 9F and Fig. 9G show a simplified diagram of an example in which the tip of the arm for linking (47) of Fig. 9D is formed in the shape of a bolt. Fig. 9H shows an example of a simplified diagram of a tire support linking portion that can be used in the present invention.

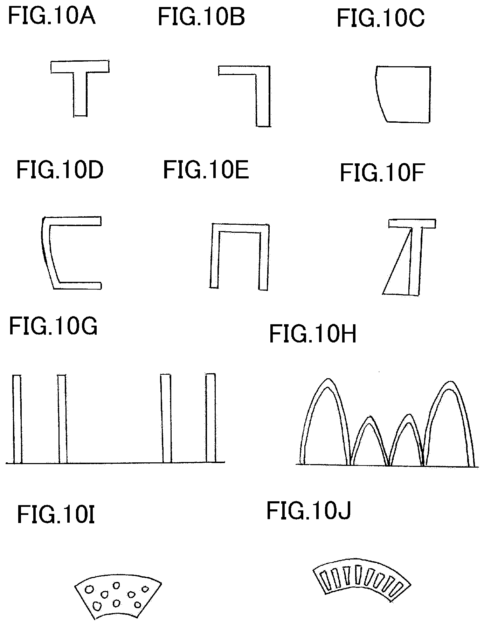

Fig. 10 is an example of a simplified diagram of a tire support that can be employed in the present invention. Fig. 10A shows that the lower portion from the contact portion with the tire has been cut. Fig. 10B shows that the portion supporting the contact portion with the tire shown in Fig. 10A is moved to one side. Fig. 10C shows that the side wall on the inner surface of the tire is curved, and has a shape so as to be supported along the tire. Fig. 10D shows that Fig. 10C has been hollowed out. Fig. 10E has a shape that supports the contact portion with the tire from both sides. Fig. 10F shows that a support is attached to Fig. 10A. Fig. 10G and Fig. 10H are examples when the contact surface with the tire is less than two-thirds and when the tire support portion is hollow. Fig. 10I and Fig. 10J are examples of the case when a hole is made in the tire support portion.

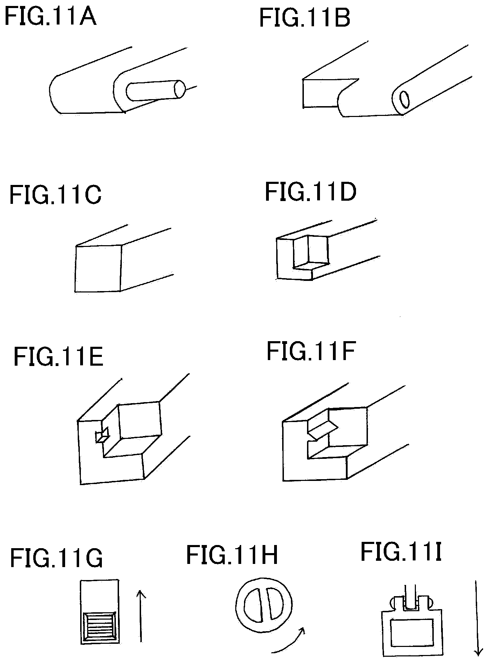

Fig. 11 is an example of a simplified diagram of a tire support portion that can be employed in the present invention. Fig. 11A includes a shaft for linking that can perform a rotational movement on the arm for linking according to claim 2. Fig. 11B is an arm for linking according to claim 2 that has a hole for linking with Fig. 11A. Fig. 11C is an example of a simplified diagram in which the joining surface between the tire supports is linear. Fig. 11D shows an example of a simplified diagram of a concave structure that can be used as the stopper portion of the tire support. Fig. 11E is an example of a simplified diagram in which a small depressed area is provided in Fig. 11D. Fig. 11F is an example of a simplified diagram in which the depressed area of Fig. 11E is made into a small projection. Fig. 11G is a type in which the mechanism for fixing is activated when the switch is slid in the direction of the arrow. Fig. 11H is a type in which the mechanism for fixing is activated when the switch is rotated and turned. Fig. 11I is a switch portion of a type in which the mechanism for fixing is activated by pulling the grip.

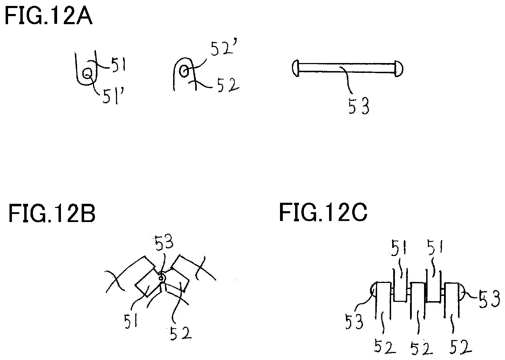

Fig. 12 is an example of a simplified diagram of a tire support portion that can be employed in the present invention. Fig. 12A shows hooks for linking in which holes have been made and shows a shaft that passes through the hooks. Fig. 12B is a cross-section in which the tire support is cut perpendicular to the axle shaft. Fig. 12C is a diagram of a portion near the (51) and (52) of Fig. 12B that is viewed from the side of the axle shaft at a position that is perpendicular to the axle shaft.

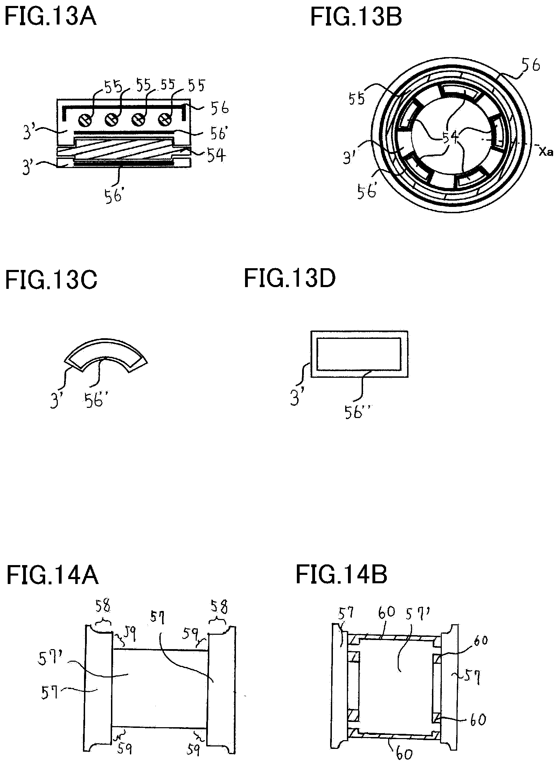

Fig. 13 is an example of a simplified diagram of a tire support portion that can be employed in the present invention. Fig. 13A is a view of a cross-section cut parallel to the axle shaft. Fig. 13B is a simplified cross-sectional view of a cross-section cut perpendicular to the axle shaft in which the line of the divided portion of the tire support according to the present invention has been omitted. Fig. 13C is a cross-sectional view in which the divided tire support components are cut perpendicular to the axle shaft. Fig. 13D is a cross-sectional view in which the tire support is cut parallel to the axle shaft.
Fig. 14 is an example of a simplified diagram of a tire support portion according to claim 7 of the present invention. Fig. 14A shows an example of a simplified diagram of a wheel according to claim 7 of the present invention. Fig. 14B is a simplified diagram in which a packing having a structure according to claim 7.

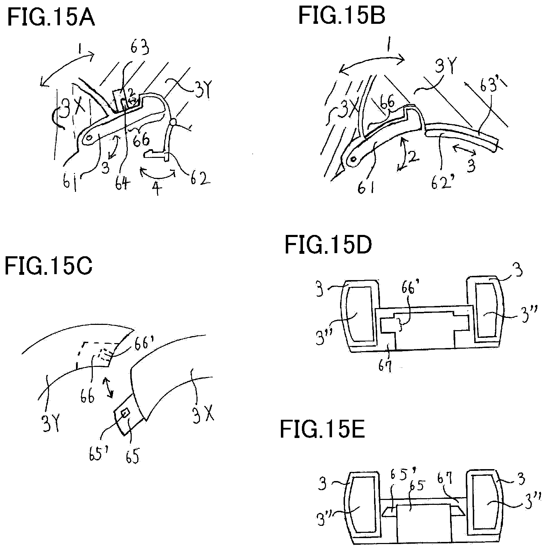

Fig. 15 is an example of a simplified diagram of a tire support portion according to claim 4 of the present invention. Fig. 15A shows a simplified diagram of an example of a stopper mechanism according to claim 4 of the present invention. Fig. 15B shows a simplified diagram of an example of a stopper mechanism that can be used in the present invention. Fig. 15C shows an example of a simplified diagram of a mechanism according to claim 4. Fig. 15D shows a cross-sectional view of the (3) at the side of the (66) of Fig. 15C. Fig. 15(E) shows a cross-sectional view of the (3) at the side of the (65) of Fig. 15C.

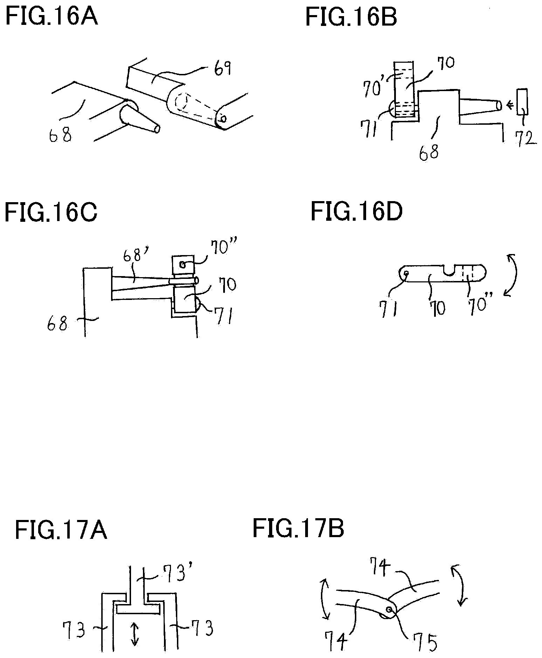

Fig. 16 is an example of a simplified diagram of a tire support portion according to the present invention. Fig. 16A shows an example of a simplified diagram of a mechanism for installation and removal of the divided tire support portions according to claim 2. Fig. 16B shows that the (68) of Fig. 16A includes a stopper (70) for linking that performs a rotational movement from the side of the axle shaft toward the outer circumferential direction of the wheel. Fig. 16C is an example of a simplified diagram in which a stopper for linking is formed at a distal end of the shaft for linking according to claim 2. Fig. 16D is used for fixing, and is a diagram in which the arm (70) for linking that is described in Fig. 16C is seen from the side.
Fig. 17 is an example of a simplified diagram of a tire support structure that can be employed in a tire support according to the present invention. Fig. 17A shows an example of a simplified diagram of a structure for linking the tire support portions that can be used in the tire support according to the present invention. Fig. 17B shows an example of a simplified diagram of a tire support portion that can be used in the tire support according to the present invention.

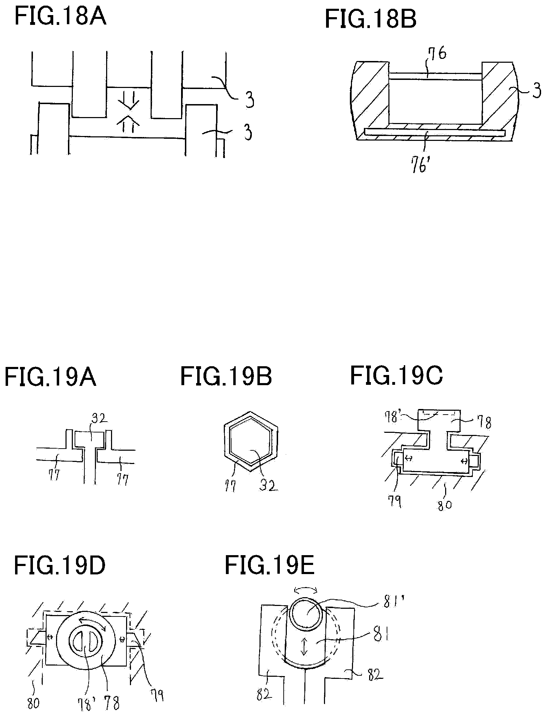

Fig. 18 is an example of a simplified diagram of a tire support portion that can be employed in the present invention. Fig. 18A shows an example of a simplified diagram when the tire support portion that can be used in the present invention is seen from a direction perpendicular to the axle shaft. Fig. 18B is an example of a simplified diagram of a cross-section of a tire support portion as seen from a direction perpendicular to the axle shaft that can be used in the present invention.
Fig. 19 is an example of a simplified diagram of a tire support portion component that can be employed in the present invention. Fig. 19A is a fastener that can be used in Fig. 7F. Fig. 19B is seen from a direction perpendicular to Fig. 19A. Fig. 19C is a fastener that can be used in Fig. 7I. Fig. 19D shows that the portion near Fig. 19C is viewed from above. Fig. 19E shows a simplified diagram of an example of a movable unit that links with the linking unit for sliding (78).

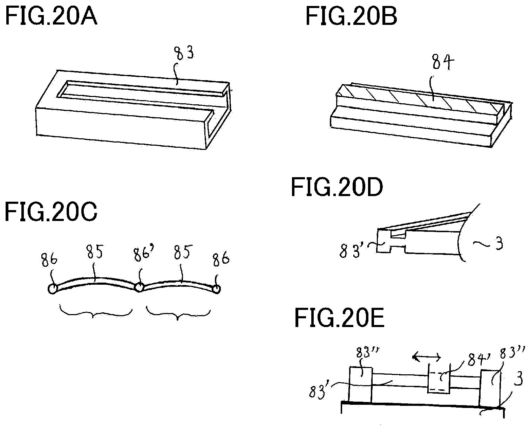

Fig. 20 is an example of a simplified diagram of a tire support portion component that includes a mechanism for sliding according to the present invention. Fig. 20A is a diagram in which a groove-shaped guide for rail for sliding that can be formed in the tire support according to claim 1 or claim 2 is shown partially from the oblique upside. Fig. 20B shows a projection-shaped linking unit having a shape that can be fitted in the rail according to claim 1 or claim 2 of the present invention. Fig. 20C shows an example of a simplified diagram in which Fig. 2G is made of a plurality of divided units. Fig. 20D shows a simplified diagram of an example of a portion of the rail guide for sliding that has a pillar shape according to claim 1 or claim 2 of the present invention. Fig. 20E shows a simplified diagram of an example of a rail guide for sliding having a pillar shape according to claim 1 of the present invention.

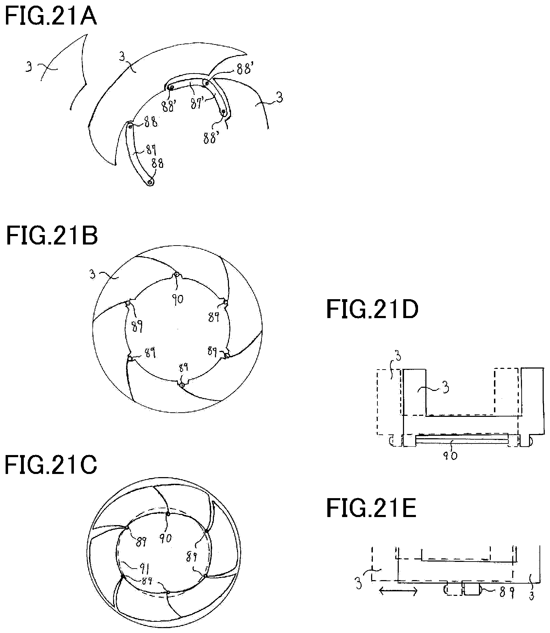

Fig. 21 is an example of a simplified diagram of a unit including a tire support component that can be employed in the present invention. Fig. 21A is a diagram of the portion near the tire support portion that is mounted at the end. Fig. 21B is different from Fig. 21A in that all tire support portions (3) are installed directly through a rotational axis (89). Fig. 21C shows a simplified diagram in which the inner edges of Fig. 21B are almost the same as a dotted line (91) indicating the inner edges of the tire. Fig. 21D is a simplified diagram showing the portion near adjacent tire supports (3) having a pin for fixing (90). Fig. 21E is a simplified diagram showing the portion near adjacent tire supports (3) having a rotational axis (89).

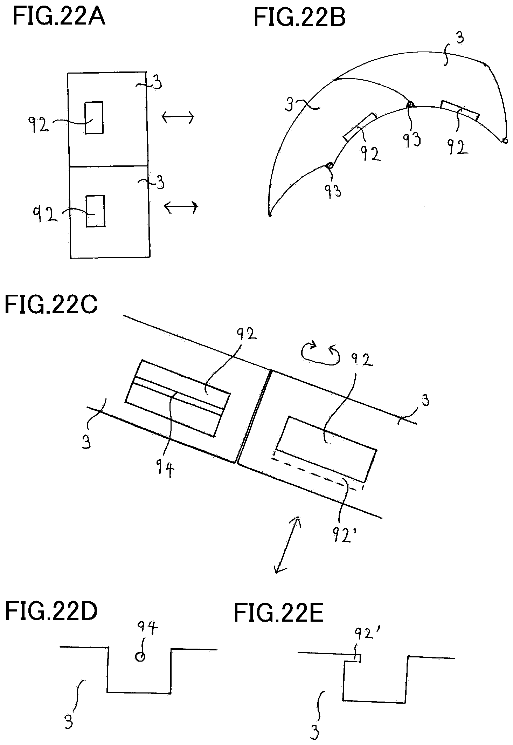

Fig. 22 is an example of a simplified diagram of a gripping portion according to claim 3 of the present invention. Fig. 22A is a diagram in which the tire support is seen from the side of the axle shaft of the tire toward the outer direction of the tire. Fig. 22B is a simplified cross-sectional view in which Fig. 22A is seen from the side of the axle shaft. Fig. 22C is an example of a simplified diagram when the tire support portions according to claim 3 are seen from the side of the axle shaft. Fig. 22D and Fig. 22E show an example of a simplified diagram of a cross-section in which Fig. 22C is cut in a direction parallel to the axle shaft.

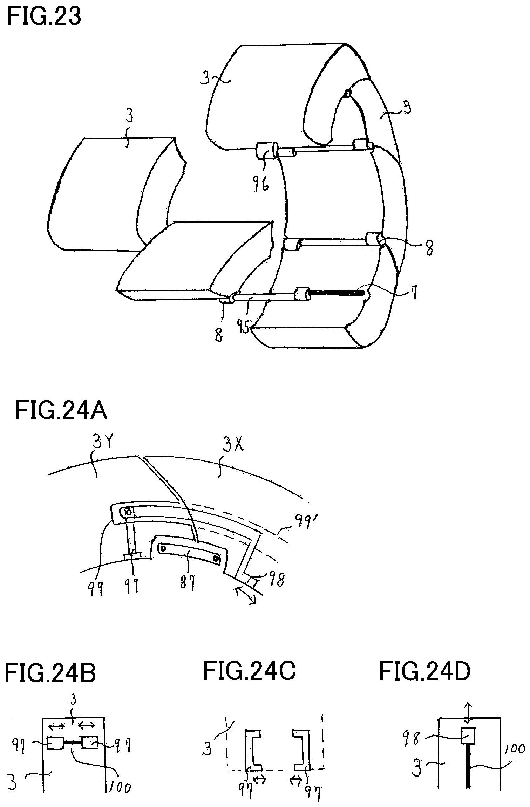

Fig. 23 is an example of a simplified diagram of a tire support that is used during a tire puncture that can be employed in the present invention.
Fig. 24 is an example of a simplified diagram of a fixing mechanism of a tire support according to claim 6 of the present invention. Fig. 24A is a diagram in which the tire support portions are seen from an extending direction of the axle shaft. Fig. 24B is a diagram in which the portion close to (97) of Fig. 24A is seen from the side of the axle shaft toward the outer circumferential direction of the tire. Fig. 24C is a diagram in which Fig. 24B is seen from a direction perpendicular to the axle shaft. Fig. 24D is a diagram in which the portion close to (98) of Fig. 24A is seen from the side of the axle shaft toward the outer circumferential direction of the tire.

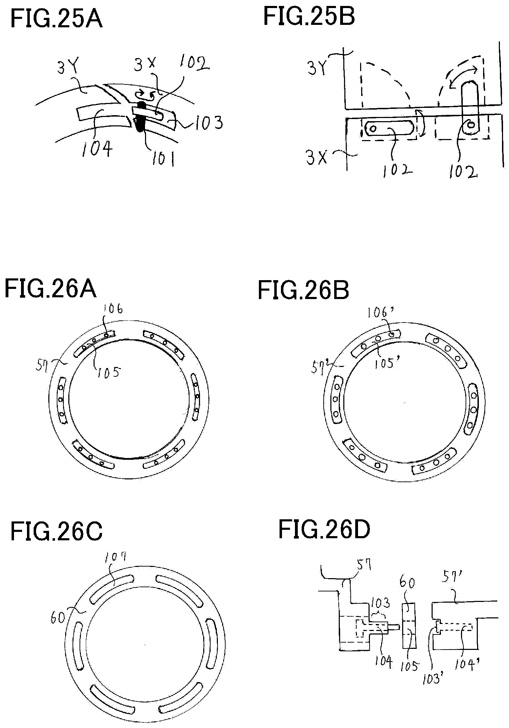

Fig. 25 is an example of a simplified diagram of a tire support according to claim 5 of the present invention. Fig. 25A is a simplified diagram of the tire support portion when the tire support portion according to claim 5 is seen from the side. Fig. 25B is a simplified diagram of the tire support portion when the tire support portion according to claim 5 is seen from the side of the axle shaft.
Fig. 26 is an example of a simplified diagram of a tire support according to claim 7 of the present invention. Fig. 26A is a simplified diagram in which a wheel rim supporting a tire similar to that in Fig. 14B is seen from the side. Fig. 26B is a simplified diagram in which a wheel rim that is fixed by sandwiching between wheel rims on both the sides for supporting the tire. Fig. 26C is a simplified diagram in which a packing sandwiched between Fig. 26A and Fig. 26B for preventing the air inside the tire from escaping is seen from the side. Fig. 26D shows a partial view of the positional relationship between the wheel rim and packing according to claim 7.

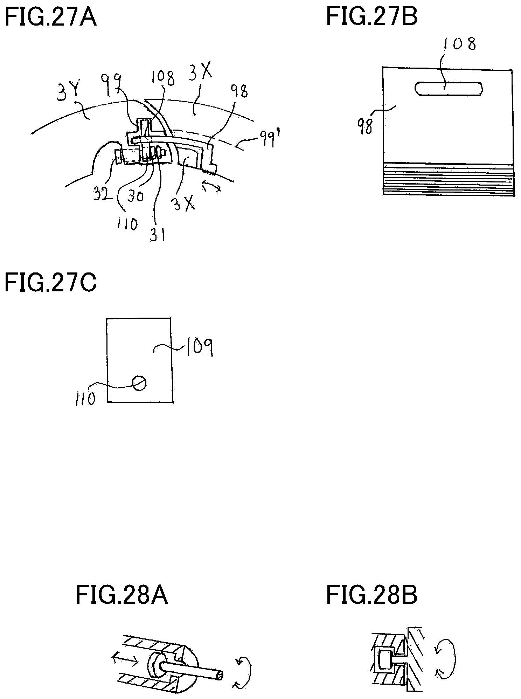

Fig. 27 is an example of a simplified diagram of a tire support according to claim 6 of the present invention. Fig. 27A is a diagram in which the tire support according to claim 6 is seen from the side. Fig. 27B is a diagram in which the arm for sliding (98) in the circumferential direction of the tire according to claim 6 is seen from the side of the axle shaft. Fig. 27C is a diagram in which a stopper for the (98) is seen from a direction perpendicular to the axle shaft.
Fig. 28 is an example of a simplified diagram of a tire support portion component that can be employed in the present invention. Fig. 28A shows a cross-sectional view in which Fig. 2A performs a back and forth motion in the direction of the arrow. Fig. 28B shows a case when Fig. 28A does not perform a sliding movement, but performs only a rotational movement.

### DETAILED DESCRIPTION OF THE PREFERRED EMBODIMENTS

Embodiments of the present invention will be described below based on Fig. 1 to Fig. 9.

Fig. 1A represents a diagram of an example of a wheel, (1) is a wheel, (2) is an axle shaft, a viewpoint (a) is a viewpoint in a diagram as seen from a position that is parallel to the axle shaft, and a viewpoint (b) is a viewpoint in a diagram as seen from a position that is perpendicular to the axle shaft.

In the following description, all four of the "cross-section in the horizontal direction", "cross-section when the tire support is seen from above", "cross-section that is cut parallel to the axle shaft", and "diagram as seen from a position that is perpendicular to the axle shaft" are as seen from the same or almost the same direction, and all four of the "cross-section in the circumferential direction", "cross-section when the tire support is seen from the side", "cross-section that is cut perpendicular to the axle shaft", and "diagram as seen from a position that is parallel to the axle shaft" are as seen from the same or almost the same direction.

Furthermore, the arrows indicating the viewpoints (a) and (b) in Fig. 1A represent the direction of viewing, but the "direction that is parallel or almost parallel to the axle shaft" as set forth in claim 1, etc., is the direction of the arrow representing the viewpoint (a).

A "joint" described in the present invention implies a "connector" or a "linking structure", and while there is a "hinged joint" that enables mutual rotation, and a "rigid joint" that does not move (see Kanabiki Kougyouyougojiten, Japan Machinist), and the joint according to claim 1 of the present invention is a "hinged joint".

Furthermore, the joint according to claim 4 can include a "rigid joint" by being configured as claim 1.

Fig. 1B is a diagram in which Fig. 1A is seen from a direction that is parallel to the axle shaft, which also indicates that the wheel (1) is ring-shaped, and the outer circle of (1) of the figure is the edge of the tire outer circumference, and the inner circle of (1) is the inner edge of the tire.

Also, the direction indicated by the arrow shown in Fig. 1B is the "direction of both the front and rear ends with respect to the rotational direction of the wheel", the "tire circumferential direction", and the "circumferential direction of the wheel", and even if the expression is different, they are all in the same direction.

Fig. 1C is a simplified diagram that describes the parts when the divided tire support used during a tire puncture as described in the claims of the present invention is seen from the same direction as Fig. 1B, and (3), (3a), and (3b) show the tire support used during a tire puncture that is to be divided, or the divided tire support portion used during a tire puncture, moreover, "both the front and rear ends with respect to the rotational direction of the wheel" indicate the direction of (3) and (3b) sides on the right and left of (3a) for (3a), and the direction of (3a) and (3) sides on the right and left of (3b) for (3b), and the adjacent tire support portions described in claims and description of the present invention are indicated as the (3a) and the (3b) in the present diagram, but the types of shape, structure, and material of the adjacent tire support portions in the claims of the present invention are not restricted thereto.

Fig. 1D is a simplified diagram that describes the parts when the (3b) of Fig. 1C is pulled out of the tire if the tire support used during a tire puncture that is to be divided, which is shown in Fig. 1C, is seen from the side of the axle shaft in the direction of the outer circumference of the tire support, and also shows that the (3b) of the present diagram is moved into the space inside the inner edges of the tire (1) near the (3a) by moving back and forth and then sliding in the direction of the arrow, that is, in a direction that is parallel to the axle shaft or the direction that is almost parallel to the axle shaft, and illustrates the movement of the tire support portion based on "a guide for sliding that performs a back and forth motion... which are provided for the purpose of moving and fixing the adjacent divided tire support portions in a direction parallel or almost parallel to the axle shaft" described in claim 1.

Fig. 1E shows an example of a simplified diagram of the tire support portion (3b) that performs a rotational movement through an axis that is parallel to the axle shaft after the (3b) of Fig. 1D is moved into the space inside the inner edges of the tire (1), and also shows that when the tire support portion (3b) performs a rotational movement in the direction of the arrow, the (3b) enters inside the space enclosed by the tire and the wheel rim, and is linked and fixed between the divided tire support (3a) and the divided tire support (3) on both sides of the (3b), and illustrates the movement of the tire support portion based on "a rotational axis for linking the tire support portions, which is installed in a direction parallel to the axle shaft or in a direction that is almost parallel to the axle shaft for the purpose of keeping the distance between adjacent divided tire support portions, and for rotational movement of the tire support portions" described in claim 1.

Fig. 2 shows a simplified diagram of an example of a guide for sliding according to claim 1 of the present invention, Fig. 2A shows a hole-type guide (4) in which a circular cylindrical shaft (5) forms a cylindrical inner-surface shape, and Fig. 2B shows a hole-type guide (4) in which a prismatic pillar (5) forms a square-shaped cylindrical inner-surface shape, which are guides formed of a hole structure having a cylindrical inner side that performs a back and forth motion by sliding in the direction of the arrow, and a bar that slides through the cylindrical structure, same as the "pillar-shaped guide for rail and a hole-shaped linking unit for linking and sliding that has a shape which fits into the pillar-shaped guide for rail, which can be installed in a direction that is parallel or almost parallel to the axle shaft" described in claim 1, and the guides used in the present invention, which perform a back and forth motion are not limited in the types of shape, structure, material, and name as long as a similar back and forth motion can be performed.

Fig. 2C shows a simplified diagram of an example of a sliding guide for the back and forth motion according to claim 1, such that (6) is a cylindrical columnar guide that is encapsulated in the (4) and performs a back and forth motion by sliding, and that stores the columnar guide (5), and (a') is a portion for fixing the (6) and (4) in order to secure the strength of the shaft by being encapsulated and fixed in (a) when the guide is contracted.

Fig. 2D, Fig. 2E, and Fig. 2F are examples of the simplified diagram of the sliding guide for the back and forth motion according to claim 1, and Fig. 2E is an example of a simplified diagram when Fig. 2D is seen from above, which shows that a projection-shaped sliding portion (8), which is the "projection-shaped linking unit", described in claim 1, used for linking, slides through a hole space (7') in a groove-shaped guide (7) provided in the tire support portion (3), and Fig. 2F illustrates the lower part of the (8) of Fig. 2D, where the top portion of the groove (7) becomes narrower than the inside and turns back in the same way as the (6) and (4) of Fig. 2C, and the protruding portion in the bottom part of the (8) becomes large due to which the (8) does not fall out from the (7), and also indicates the same structure as "a groove-shaped guide for rail and a projection-shaped linking unit for linking and sliding that has a shape which fits into the groove-shaped guide for rail, which can be installed in a direction parallel to the axle shaft or in a direction that is parallel or almost parallel to the axle shaft" described in claim 1 through a simplified diagram.

Fig. 2G shows a simplified diagram of an example of an arm for linking according to claim 4 of the present invention, such that (9) is an arm for linking and fixing the divided and adjacent tire support portions used during a tire puncture by linking with the tire support portions (3) through a shaft and performing a rotational movement, and (9') is a rotational axis according to claim 1 that is provided on "both the front and rear ends with respect to the rotational direction of the wheel" in the arm (9).

The type of the arm used for linking and fixing the tire support components used during a tire puncture is not restricted as long as the conditions of the present invention are satisfied, and could be a straight or curved pillar-type or plate-shaped arm, an arm in the shape of a lattice provided with holes, a hollow arm, or a plurality of linked arms in which the rotational axis and the guide for sliding are provided at both the front and rear ends with respect to the rotational direction of the wheel, according to claim 1.

Fig. 3 shows an example of a simplified diagram of the tire support according to claim 1 of the present invention, the (3) of Fig. 3A is a tire support portion, and the arm for linking (9) links the arms for linking through the "shaft installed in a direction that is parallel or almost parallel to the axle shaft" according to claim 1, and is linked through a shaft (10) that performs a rotational movement in the same direction as the axle shaft, and is linked with the rotational axis (10) so as to be able to perform a rotational movement in the same direction as the axle shaft that is linked with the linking unit (8) that slides in the predetermined direction of claim 1 by linking with the (7) provided in the (3), and (11) is a hole for the rotational axis for linking and fixing the rotational axis (10) for linking with the arm for linking provided in another divided tire support portion, which is installed adjacent thereto by linking, used during a tire puncture, which is installed nearby through linking, and as long as the shape of the tire support satisfies the conditions of the present invention, its types are not restricted.

Fig. 3B is a simplified diagram in which Fig. 3A is seen from the side of the axle shaft, and the (9), which is linked with the (8) and the (8), move along the groove-shaped rail-type guide described in claim 1, in the direction of the arrow, and cause the adjacent (3) to slide, and thus, have a structure according to which the (9) can perform a rotational movement in an inner direction of the tire circumference so as not to overlap with the mutually adjacent (3).

Fig. 3C is a diagram showing the state when the (8) and (9) of Fig. 3B are slid according to the condition of claim 1, and configures the ring of the tire support used during a tire puncture according to claim 1, which is formed through continuous linking tire support portions having the same shape.

Fig. 3D shows a guide that is different from the tire support portion of Fig. 3A, and moves the sliding shaft (8) in the right and left outer directions near the center of the (3).

Fig. 3E is a simplified diagram in which Fig. 3D is seen from the side of the axle shaft, and while the (9) and the (8) slide in the outer direction, the types of shape and structure of the device used for sliding are not restricted as long as the conditions of the present invention are satisfied.

Fig. 3F is an example of a simplified diagram in which the arms for linking in separate adjacent tire support portions are linked, and the plate-shaped arms for linking (9) of Fig. 3D are linked with the tire support portions through the rotational axis (10) positioned on one of "both the front and rear ends with respect to the rotational direction of the wheel", and the adjacent tire support portions are linked through the rotational axis (10') positioned on the other of "both the front and rear ends with respect to the rotational direction of the wheel", which is present between the arms for linking (9).

The guides for sliding of the rotational axis according to claim 1 of the present invention are of the same type, and the number of the arms (9) for linking the tire support portions according to claim 1 of the present invention, and the number of the axes (10) and (10') (such as when two or more arms in one of the tire support portions are linked with a shaft), as well as the shape, structure, and material are not limited as long as the conditions of the present invention are satisfied.

In Fig. 3A, the joining surface of the tire support portion (3) with another tire support portion (3) is curved, but the type of the joining surface is not limited, as long as the shape of the joining surface satisfies the conditions of the present invention, even if the joining surface of the tire support portion (3) with an adjacent tire support portion (3) is like a straight surface.

Fig. 4 is an example of a simplified diagram of a tire support portion in which a stopper that can be used in the present invention moves in a direction that is parallel or almost parallel to the axle shaft, Fig. 4A shows that the arm for linking (12) is linked through a projection (14) that slides and moves through the hole (13') provided in the arm for linking (13), and Fig. 4B shows a plate-shaped or a projection-shaped stopper for fixing that has a structure in which the arm for linking (13) is linked through the projection (14) that slides and moves through the hole (12') provided on both sides of the arm for linking (12), and the stopper slides in a direction that is parallel or almost parallel to the axle shaft, and the type of the stopper is not limited as long as the stopper has a structure with an effect that satisfies the conditions of the present invention.

Fig. 5 is an example of a simplified diagram of a device for linking and fixing that can be used in the present invention, Fig. 5A is a figure showing that the linking and fixing unit (15) and the linking and fixing unit (15') are linking devices for linking and fixing the tire supports by being caught, and the (15) performs installation and removal of the tire support when a movable unit (15") configured by a spring (16) is pressed when a grip (15''') for operation is slid in the direction of the arrow, and Fig. 5B is a diagram of a linking device portion by which the (15''), which is configured by the spring (16) flares when the (15''') is slid in the direction of the arrow, and a stopper unit that fixes another fixing unit (15) also flares in the direction of the arrow.

Fig. 6 shows a simplified diagram of an example of a tire support used during a tire puncture, which can be used in the present invention. Fig. 6A shows an example of a simplified diagram of a mechanism by which the tire supports can be attached to one another by performing a back and forth motion in the direction of the arrow, and is an example where due to the back and forth motion of the tire support, the "hole or groove" for installation and removal of a fixed projection provided in the tire support portion (3), that is, the space (18) for installation and removal, and the "projection for linking the tire support portions that is installed directly in the tire support portions", which is provided in the adjacent tire support portion (3), that is, the projection (17) for installation and removal are linked, and the projection (19) that is provided in the (18) and is retracted by being projected and pushed due to the force of the spring, and the groove in which the (19) is inserted and fixed are provided in the projection (17) for installation and removal of the tire support.

Fig. 6B shows a cross-sectional view of the (3) at the side of the (18) of Fig. 6A, which illustrates a tire support (3) having a projection (19) that performs a back and forth motion due to the power of a spring having a strength that enables the insertion and fixing of the projection (17) for installation and removal, which has a groove for fixing the adjacent tire support, and enables joining of the projection-shaped device (17) for installation and removal, which has the groove for fixing.

Fig. 6C shows a cross-sectional view of the (3) at the side of the (17) of Fig. 6A, which illustrates a tire support (3) having a projection (17) for installation and removal of a groove having a strength that enables the fixing of the projection of the adjacent tire support.

Fig. 6D is a simplified diagram of an example of a cross-section of a pillar-shaped sliding axis for back and forth motion according to claim 1, the (8) is a linking portion for fixing the guide and the tire support, the cylindrical guides (21) and (22) are formed in a shape having a turned-back part at the tip so as to prevent them from coming apart, and if the turned-back part is not provided, it results in the guides according to claim 2.

In Fig. 6D, a circular cylindrical bar (20) is provided inside the (21), and when the guide is contracted, the (20) enters inside the (22), thus increasing the strength of the shaft.

Fig. 6E shows an example of a simplified diagram when the side of the axle shaft of the tire support used during a tire puncture according to the present invention is seen from the side of the axle shaft in the circumferential direction of the wheel, and indicates that the linking unit (8') that is fixed to the tire support (3) is linked with the linking unit (8) for movement and fixing, which is the "projection-shaped linking unit for linking and sliding that has a shape which fits into the groove-shaped guide for rail" linked with "a groove-shaped guide for rail that can be installed in a direction parallel to the axle shaft or in a direction that is almost parallel to the axle shaft", which is provided in the tire support according to claim 1 of the present invention, in the bar-like guide (23) that stretches by performing a back and forth motion according to claim 1 of the present invention, and the adjacent tire support portions are linked by the (8) and (8') that are joined in the guide (23) that performs a rotational movement by having the same circular cylindrical shape as the mechanism described in claim 1 about "a pillar-shaped guide for rail and a hole-shaped linking unit for linking and sliding that has a shape which fits into the pillar-shaped guide for rail, which can be installed in a direction parallel to the axle shaft or in a direction that is almost parallel to the axle shaft".

Fig. 6F shows an example of a simplified diagram in which one tire support of Fig. 6E is seen from the outer circumference of the tire in an inclined direction, and a plurality of units of the (3) are linked to form a ring shape.

Fig. 6G indicates a diagram in which two lined-up tire supports according to Fig. 6E are seen from the same direction as Fig. 6E, which illustrates that the (8) moves the guide (7') provided in the (3) in the same direction as predetermined in claim 1, and due to the fact that the bar-like guide (23) between the (8) and (8') is also stretched, the lined-up (3) do not overlap with each other, and also illustrates a rotational axis that can perform a rotational movement in a direction parallel to the axle shaft as set forth in claim 1 as "a rotational axis for linking the tire support portions, which is made of shafts installed in a direction parallel to the axle shaft or in a direction that is almost parallel to the axle shaft for the purpose of keeping the distance between adjacent divided tire support portions, and for rotational movement of the tire support portions".

Fig. 6H is a simplified diagram of an example of a cross-section of a guide that can be used in the present invention, which illustrates that due to a turned-back structure between the groove-type guides for rail (7) on both sides, according to claim 1, the linking unit (8) exists in a way that it can be fixed, and a guide (23') that performs the same operation as the (23) is present in the (8).

Fig. 6I shows a simplified diagram of an example of a slide stopper between the tire support portions that is used to fix the tire support during a tire puncture, which illustrates a stopper mechanism having a protrusion which is protruded into a hole-shaped space (25) provided in the (3) when both (3) slide in the direction toward each other, where the protrusion is provided in the other (3), which, normally, stays in a protruded state by a spring, which is depressed by a side surface of the facing (3) when the facing (3) provided with the (25) comes near, and which is protruded again when it comes near the (25).

Fig. 7 shows a simplified diagram of an example of a tire support used during a tire puncture that can be used in the present invention, and Fig. 7A shows an example of a plate for controlling deformation of the tire support inside the tire support portion (3) used during a tire puncture, which has a structure in which the pillar-shaped rail guide (27) for sliding according to claim 1, and the groove-shaped rail guide (7') according to claim 1 are provided in the plate (26) of which the weight is reduced by making a hole on an inner side.

Fig. 7B is a simplified diagram when Fig. 7A is seen from the side, and the (26) has a bowing curved shape in alignment with the shape of the tire support portion (3).

Fig. 7C shows that a guide (7') for the (8) is provided near the center of the (26), which has a shape that can be used in Fig. 3D.

Fig. 7D shows an example of the (8) that can be used in Fig. 7C, and also illustrates that a hole (28) is present that is used to fix linking portions (8L) linked with the left-side guide, and linking portions (8R) linked with the right-side guide, which are linked with the (26), by a bolt that passes through both.

Fig. 7E is a diagram in which Fig. 7D is seen from the bottom, which illustrates that the (8L) and (8R) are fixed by a check nut having a lock nut (30) and a real nut (31), and a bolt (29) passes through both.

Fig. 7F shows a simplified diagram of an example of a tire support used during a tire puncture that can be used in the present invention, and illustrates that the plate (26) has a guide (7') for movement from the side of the axle shaft in the direction of the outer circumference of the tire, and a plate fixing bolt (32) that passes through toward the side of the axle shaft from the outer circumferential direction of the tire is present.

Fig. 7G shows a simplified diagram of an example of a plate for inserting in Fig. 7F, and illustrates that the unit (35) provided on plate (33) is a linking unit that is inserted in the (7') of Fig. 7F and moved, and the (32) of Fig. 7F is passed through a hole that passes across the top and bottom of the plate (34), and then fixed with a nut.

Fig. 7H is a diagram in which Fig. 7G is seen from above, and illustrates a hole (34) that enables the movement of a guide (36) for the (8) and the (32).

Fig. 7I shows a simplified diagram of an example in which the tire support portion used during a tire puncture according to the present invention is seen from the side of the axle shaft, and illustrates the presence of a raised portion (3h) at the side of the axle shaft on the surface at the side of the axle shaft of the tire support portion, a projection (37) that is raised to fix the plate, a bolt (38), and a groove-type rail guide (7') according to claim 1.

Fig. 7J shows an example of a simplified diagram in which a washer and nut are installed on the (37) and (38) of Fig. 7I when seen from the side, and illustrates that check nuts (30) and (31), and washer (39) are installed on the bolt (38).

Fig. 7K shows an example of a simplified diagram of a plate that is mounted on Fig. 7I by the (8), and illustrates a plate that includes a hole (34) that passes through the plate (33) from above and bottom in order to pass through the (37), and includes the rotational axis (10) at the side of the arm and the side of the tire support, and the types of structure, shape, and material are not limited as long as the conditions of the present invention are satisfied.

Thus, the joint for linking the divided tire support portions may be a combination of a "hinged joint" and a "rigid joint", of which the type is not limited as long as the conditions of the "hinged joint" according to claim 1 are satisfied.

Fig. 8 is an example of a simplified diagram of a fixing unit of the linking device of a tire support that can be used in the present invention, which indicates that Fig. 8A is a top view of the fixing unit, (41') is a groove provided in the tire support (41) for sliding of the grip (40) for operation, (40') is a hole provided in the (40) for passing the bolt, Fig. 8B is a cross-sectional view of the portion near the fixing unit of Fig. 8A, and after sliding (40), the bolt (42) provided for fixing the (41) and (40) is made to pass through the threaded hole (41") and (40') provided on the (41), and then inserted and fixed.

Furthermore, Fig. 8C is a simplified diagram of an example of a method of fixing the tire support portion and the linking portion that can be used in the present invention, (45) is a stopper that can slide and move across the inside of the tire support portion (43), the (45) is a stopper that passes through the hole provided in the arm for linking (46) and fixes the(46) as well, and by using a bolt (42) for fixing a block (44) that is used to prevent the sliding of the (45) and fix it, the tire support portion and the linking portion are installed and removed.

The fixing mechanism used in the present invention may be configured in a linking arm as shown in Fig. 4, or may be configured in a tire support portion as shown in Fig. 8C, and its type is not limited as long as the conditions of the present invention are satisfied.

Fig. 9 shows a simplified diagram of an example of a stopper mechanism of a tire support that can be used in the present invention, Fig. 9A indicates that the tire support portion (3) is configured by a stopper for linking (47) provided in the tire support portion (3) on one side and a hole (48) provided in the other tire support portion (3) in which the (47) is inserted and fixed, and when the rotational axis (48) that performs a rotational movement and a sliding movement according to claim 1 starts performing the rotational movement, the stopper for linking (47) configured in one tire support portion (3) is inserted into the hole for fixing (48) configured in the other tire support portion (3) by sliding while performing a rotational movement, and a plurality of the tire support portions are linked into a ring shape, and then a wheel rim is inserted inside, therefore, the movement of the shaft (49) in each tire support portion, which moves according to claim 1, is controlled in the direction of the rotational axis, and the (47) and (48) are caught and fixed.

The stopper mechanism of Fig. 4, Fig. 5, or Fig. 8 of the description and the stopper mechanism having another shape may be combined together with the stopper mechanism shown in Fig. 9 of the description, and the type of the stopper mechanism is not restricted as long as the conditions according to the claims of the present invention are satisfied.

Fig. 9B is a simplified diagram of an example of a stopper mechanism that can be used in the present invention, and the projection (47) for the stopper that is provided in the tire support (3) includes arms for linking (50) having on both ends, a rotational axis that performs the rotational movement and the sliding movement according to claim 1 of the present invention.

Fig. 9C shows a simplified diagram in which (50) of Fig. 9B are seen from the side of the axle shaft in the circumferential direction of the tire, and the arms for linking (50) include a hole (50') in which the (47) is inserted and fixed.

Fig. 9D shows a simplified diagram of an example of a stopper mechanism of the tire support that can be used in the present invention, which indicates a stopper mechanism by which the projection (47) for the stopper that is provided in one tire support is inserted and fixed in the hole (50') provided in the arms for linking (50) that are linked with the other tire support.

Fig. 9E shows an example of a simplified diagram in which Fig. 9D is seen from the side of the outer circumference of the tire in the direction of the side of the axle shaft, and in the tire support (3) in which both ends of the tire support are high and the center portion is low, the projection (47) formed in one tire support (3) passes through the groove (48') provided for passing through the projection (47) formed in another tire support (3) from the direction of the tire outer circumference in the direction of the axle shaft of the tire, and is linked with the hole (50') for fixing that is formed in the arms (50) for linking.

Fig. 9F and Fig. 9G show a simplified diagram of an example in which the tip of the arm for linking (47) of Fig. 9D is formed in the shape of a bolt, and a check nut made of the lock nut (30) and the real nut (31) is fixed on the threaded bolt-shaped portion (29') provided on the tip of the (47).

Fig. 9H shows an example of a simplified diagram of a tire support linking portion that can be used in the present invention, and because the arms (50) for locking on both sides are linked by a plurality of plate portions (51) and (52) for linking, the tire supports are linked by a shaft (53) that passes through the (51) and (52) and links them, and that can perform a rotational movement.

Each number of the (3), (51), (52), and (53) of Fig. 9 and each location which includes them are not limited as long as the tire support satisfies the conditions of the present invention.

The mechanism for installation and removal, as well as fixing that is described in Fig. 5 and the like is not limited as long as the tire supports can be installed and removed, such that the mechanism may be formed in the surface facing the divided tire support.

The above description is provided for explaining the claims, and does not limit the types of shapes, materials, and structures as long as the conditions of the present invention are satisfied.

### Examples

Embodiments of the present invention will be described below based on Fig. 10 to Fig. 23.

Fig. 10 shows an example of a simplified diagram of the tire support portion according to the present invention, and Fig. 10A to Fig. 10F are cross-sections in which a portion on one side of the tire support is cut parallel to the axle shaft when the tire support is seen from a direction perpendicular to the axle shaft, Fig. 10G and Fig. 10H are cross-sections in which the tire support is seen from a direction perpendicular to the axle shaft, Fig. 10I and Fig. 10J are diagrams in which the tire support portions are seen from a direction that is parallel to the axle shaft, the upper side of Fig. 10A to Fig. 10J is the contact portion with the tire inner surface, and the lower side is the portion that is contacted to the wheel rim at the side of axle shaft.

Fig. 10A shows that the lower portion from the contact portion with the tire has been cut, Fig. 10B shows that the portion supporting the contact portion with the tire shown in Fig. 10A is moved to one side, Fig. 10C shows that the side wall on the inner surface of the tire is curved, and has a shape so as to be supported along the tire, Fig. 10D shows that Fig. 10C has been hollowed out, Fig. 10E has a shape that supports the contact portion with the tire from both sides, Fig. 10F shows that a support is attached to Fig. 10A, and this support can be provided on both sides, or may be shifted alternately, or the shape and scope of support may be changed, and there are several shapes of the contact portion with the tire, and the portion supporting the contact portion, and as long as the conditions of the present invention are satisfied, there is no limitation on the types.

Fig. 10G and Fig. 10H are examples when the contact surface with the tire is less than two-thirds and when the tire support portion is hollow, and the shapes, the contact interval and the number of the components of the tire support or types of shape such as wave form of tire support are not limited as long as the conditions of the present invention are satisfied.

Furthermore, Fig. 10H is an example in which the width of the tire is broadened so as to arrange a tire similar to a run-flat tire in which the wheel is supported during a tire puncture.

Fig. 10I and Fig. 10J are examples of the case when a hole is made in the tire support portion, and the strength of the tire support, such as the shape and number of holes is not limited as long as the conditions of the present invention are satisfied.

Fig. 10I and Fig. 10J are tire supports that can be used in the present invention, in which the circumference is divided, and show a tire support component unit having a bridge shape by including air holes for reducing the weight of the tire support.

In the tire support according to the present invention, the contact portion with the tire is made of rubber, silicon, or a high molecular compound such as foamed material, and the structure of the support portion of the contacted portion is not limited as long as the conditions of the present invention are satisfied, and could be made hollow, and a recyclable hollow metal or carbon material may be used.

Furthermore, for fixing of the tire supports, the joining portion between one tire support and the other tire support may be fixed with a bolt, or the mechanism for installation and removal such as the mechanism shown above in Fig. 8 may be used for fixing, or the tire supports may be fitted and fixed through the rotational movement performed by the shaft according to the present invention, or the tire support may be formed in the shape of a ring.

According to the claims of the present invention, an air pressure sensor for a tire may be used, or a passageway structure such as an air passage groove and hole for causing the air to move from the surface at the side of the wheel of the tire support toward the surface at the side of the tire can be used in combination regardless of the claims in the prevent invention, and the types are not limited.

Fig. 11 shows an example of the simplified diagram of the tire support structure portion that can be used in the present invention, and Fig. 11A includes a shaft for linking that can perform a rotational movement on the arm for linking according to claim 2.

Fig. 11B is an arm for linking according to claim 2 that has a hole for linking with Fig. 11A, and since the contact surface between Fig. 11A and Fig. 11B at the time of linking Fig. 11A and Fig. 11B is a flat surface, even when the tire supports perform a rotational movement, control that prevents the tire supports from tilting in a direction other than the direction of rotation of the shaft is achieved, therefore, a stable rotational movement is possible.

Furthermore, in Fig. 11A and Fig. 11B, the shape of the shaft of the arms for linking used for connecting the adjacent joints according to the present invention, and that of the hole or groove for inserting the shaft is circular cylindrical, but even if the joining portion may have a shape that does not rotate, including polygonal column-shaped shaft, hole, or groove, as long as the arms for linking and the tire support portions including the arms for linking can perform a rotational movement, the tire support portions themselves can be rotated, and the types are not limited if the conditions according to the claims of the present invention are satisfied.

Fig. 11C is an example of a simplified diagram in which the joining surface between the tire supports is linear, but as long as the conditions according to the claims of the present invention are satisfied, the types of shape and structure are not limited, and the surface where the tire supports face each other or the joining surface can be like a straight surface, curved surface, or an indented surface, or a combination thereof.

Fig. 11D shows an example of a simplified diagram of a concave structure that can be used as the stopper portion of the tire support, and while the tire support can be fixed by catching a tire support having a convex structure, which is an opposite shape as the concave structure, similar to Fig. 11C, the type thereof may not be limited as long as the conditions according to the claims of the present invention are satisfied.

Fig. 11E is an example of a simplified diagram in which a small depressed area is provided in Fig. 11D, and the tire support is fixed by catching a switch-type stopper, as shown in Fig. 5, in the small depressed area.

Fig. 11F is an example of a simplified diagram in which the depressed area of Fig. 11E is made into a small projection, and the tire support is fixed by catching a switch-type stopper, as shown in Fig. 5, in the projection.

The tire support and the tire support fixing device according to Fig. 11D, Fig. 11E, and Fig. 11F are not limited with regard to the types of shape, structure, and material as long as the tire support can be fixed in an arbitrary manner.

Fig. 11G, Fig. 11H, and Fig. 11I are examples of the simplified diagram of the movable portion of the switch for fixing that can be used in the present invention, Fig. 11G is a type in which the mechanism for fixing is activated when the switch is slid in the direction of the arrow, Fig. 11H is a type in which the mechanism for fixing is activated when the switch is rotated and turned, and Fig. 11I is a switch portion of a type in which the mechanism for fixing is activated by pulling the grip, and the grip itself can be tilted by a shaft provided near the base of the grip, and the types of shape, structure, and material of Fig. 11G, Fig. 11H, and Fig. 11I are not limited as long as they perform the function of fixing tire support.

Fig. 12 is an example of a simplified diagram of a tire support structure that can be used in the present invention, such that the (51) and (52) in Fig. 12A are hooks for linking in which holes (51') and (52') have been made, and which are provided on the tire support, the (53) of Fig. 12A is a shaft that passes through the (51) and (52) and links them, and that can perform a rotational movement, and is also a mechanism that enables rotation of the tire support portions by linking the tire supports, Fig. 12B is a cross-section in which the tire support is cut perpendicular to the axle shaft and shows a diagram in which the (51) and (52) that are provided in each tire support (3) are linked and fixed by the (53), Fig. 12C is a diagram of a portion near the (51) and (52) of Fig. 12B that is viewed from the side of the axle shaft at a position that is perpendicular to the axle shaft, and also shows the shaft (53) that passes through a plurality of the (51) and (52) and fixes them.

The respective numbers of (3), (51), (52), and (53) in Fig. 12 and respective compositions location are not limited as long as the tire support satisfies the conditions of the present invention.

Fig. 13 shows an example of a simplified diagram of a cross-section of the tire support that can be used in the present invention, Fig. 13A is a view of a cross-section cut parallel to the axle shaft, Fig. 13B is a simplified cross-sectional view of a cross-section cut perpendicular to the axle shaft in which the line of the divided portion of the tire support according to the present invention has been omitted, Fig. 13C is a cross-sectional view in which the divided tire support components are cut perpendicular to the axle shaft, Fig. 13D is a cross-sectional view in which the tire support is cut parallel to the axle shaft, the (54) is a structure for support that is provided close to the wheel rim, the (55) is a wire in a single tire support block, the (56) is a carcass ring present inside the circumference of the tire support, the (56') is a carcass ring formed in the outer circumferential portion in the block of a single tire support (3'), and the dotted line (Xa) is the portion where the cross-section (A) of Fig. 13 exists.

Fig. 13C is a simplified diagram of a divided tire support as seen from a position that is parallel to the axle shaft, the (56") that performs a similar operation as the carcass, etc., exists in a ring shape in a direction perpendicular to the axle shaft of each tire support part, Fig. 13D is a simplified diagram of a divided tire support as seen from a position that is perpendicular to the axle shaft, the (56") that performs a similar operation as the carcass, etc., exists in a ring shape in a direction parallel to the axle shaft of each tire support part, and the types of the (56") are not limited, and various types exist, for example, the (56") may be configured such that Fig. 13C and Fig. 13D exist individually, or Fig. 13C and Fig. 13D exist in combination, or the (56") exists in an inclined direction with respect to Fig. 13C or Fig. 13D, or Fig. 13D that is in an inclined direction exists in one direction, or else (56") is not used.

Fig. 14A shows an example of a simplified diagram of a wheel according to claim 7 of the present invention, (57) is a tire support portion of a wheel rim having a tire support portion (58), (57') is a wheel rim portion that links with the (57), an indented level difference (59) is formed due to linking the (57') and (57), and by sandwiching and fixing the left-right circumference of the tire supports according to the present invention near the (59) of the wheel rim, a structure for support can be fixed on the left-right without any deviation due to a level difference having a simple shape.

The (59) of Fig. 14 has a plane circumferential shape, and the joining portion between the wheel rim and the tire support is perpendicular with respect to the axle shaft, however, the wheel rim and tire support may be wedge shape inclining toward the axle shaft so as to be engaged with each other, or may be formed such that the circumferential surface is a straight line or a curved indentation, or the tire support portions of the wheel may be formed either on the inner side or the outer side of the joints between wheels, and thus, the shape and components of the (59) are not limited in types as long as they conform to the present invention.

Fig. 14B is a simplified diagram in which a packing (60) having a structure according to claim 7 (a structure in which the diameter of the portion that is in contact with the tire support is larger than the diameter of the packing portion), as shown in Fig. 14A, is mounted on wheels (57, 57') having a structure of a hole that passes from the surface at the side of the axle shaft near the wheel rim toward the surface at the side of the tire, and which can sandwich a packing for preventing leakage of air in the tire, and materials that work as a packing, regardless of the name, such as packing, seal, sheet, film, and ring can be used in the tire support or wheel according to the present invention, and the wheel according to the present invention is not limited in type, and can have the structure and structural components described in Japanese Published Unexamined Patent Application No. 2009-241915.

The examples mentioned above are provided merely to explain the present invention, and there is completely no limitation on the types of the embodiments such as shape, material, and structure as long as these are within the scope of the claims of the present invention.

Fig. 15A shows a simplified diagram of an example of a stopper mechanism according to claim 4 of the present invention, where the operation of a stopper that moves in the direction of an arrow 2 is shown, such that an arrow 1 indicates the tire circumferential direction, a fixing arm (61) made of a plate that performs a rotational movement from the axle shaft in the direction of an arrow 3 toward the outer circumferential direction of the wheel is inserted in the space for insertion ("a hole or a groove for fixing, where insertion or linkage is performed for linking with the joint of the arm or the projection" in claim 4) (66) of the arm provided in the tire support portion (3Y), and the stopper (62) for fixing the arm performs a rotational movement in the direction of an arrow 4 due to which the arm (61) is fixed by an opening/closing lid, and by inserting the projection provided in the stopper (62) for fixing inside the (3Y), the (62) is fixed inside the guide for fixing (63).

Thus, the arm (61) of Fig. 15A is linked with the tire support (3X) by a rotational axis described as "a rotational axis in which a shaft around which a rotational movement is performed, the shaft being installed in a direction parallel to the axle shaft or in a direction that is almost parallel to the axle shaft" in claim 4, and performs a rotational movement, however, the arm may be expressed as a projection, and the type of shape, structure, and material are not limited as long as the same effect is realized.

Fig. 15B shows a simplified diagram of an example of a stopper mechanism that can be used in the present invention, where the arrow 1 indicates the tire circumferential direction, a fixing arm (61) that is linked with the tire support portion (3X) by a rotational axis and is made of a plate that performs a rotational movement from the axle shaft in the direction of the arrow 2 toward the outer circumferential direction of the wheel is inserted in the space for insertion ("a hole or a groove for fixing, where insertion or linkage is performed for linking with the joint of the arm or the projection" in claim 4) (66) of the arm (61) provided in the tire support portion (3Y), and the stopper (62') for fixing the arm fixes the arm (61) through opening and closing by sliding in the circumferential direction of the wheel of the arrow 3, and the stopper (62') for fixing links with the guide (63') for sliding that is provided in the tire support portion (3) and slides, so as to fix the arm component (61) for linking according to the present invention, and performs the role of a stopper.

Fig. 15C shows an example of a simplified diagram of a mechanism according to claim 4, wherein due to the inclusion of the rotational axis according to claim 1 in the tire supports, the tire support portion (X) or the tire support portion (Y) performs a rotational movement in the direction of the arrow and the tire support portions can be mutually installed or removed, and when the tire support (3) performs a rotational movement due to the rotational axis, the projection-shaped projection device (65) for installation and removal that is provided in the tire support portion (3X) according to claim 4 links with the space (66) for installation and removal that is made of the hole or groove (65) provided in the adjacent tire support portion (3Y), and by installing a projection (65'), which projects out due to the force of the spring provided inside (65) and retracts by being pressed, and a groove (66') provided in the (66) in which the (65') is inserted and fixed, in the tire support portion (3), the tire support portion (3X) or the tire support portion (3Y) itself performs a rotational movement around the shaft installed in a direction that is parallel to the axle shaft or a direction that is almost parallel to the axle shaft, and the conditions of claim 4 are satisfied by the space (66) made of a hole or groove for fixing in which projections (65) and (65) are inserted or linked for the purpose of linking the tire support portion (X) and the tire support portion (Y).

Fig. 15D shows a cross-sectional view of the (3) at the side of the (66) of Fig. 15C, which is a structure (67) in which the (3) has a hollow space (3"), and the groove (66') having a strength that enables the fixing of the projection of the adjacent tire support.

Fig. 15E shows a cross-sectional view of the (3) at the side of the (65) of Fig. 15C, which illustrates the structure (67) in which the (3) has the hollow space (3"), and a projection-shaped device (65) for installation and removal having the projection (65') that performs a back and forth motion due to the power of a spring having a strength that enables its insertion and fixing in the space having a groove for fixing the adjacent tire support, is joined.

Fig. 16A shows an example of a simplified diagram of a mechanism for installation and removal of the divided tire support portions according to claim 2, and (68) of Fig. 16 is a linking portion having a shaft or a projection for linking that slides in a direction that is parallel or almost parallel to the axle shaft according to claim 2, and where the rotational axis of Fig. 11A is in a taper shape, while (69) of Fig. 16 is a linking portion having a hole or a groove in which the shaft or projection for linking according to claim 2 can be encapsulated or made to pass through, and which can be slid in a direction that is parallel or almost parallel to the axle shaft, and where the hole of Fig. 11B is in a taper shape.

Fig. 16B shows that the (68) of Fig. 16A includes a stopper (70) for linking that performs a rotational movement from the side of the axle shaft toward the outer circumferential direction of the wheel, and the (70) is a linking portion for fixing that has a hole (70') for fixing, which is linked and performs rotation by a rotational axis (71).

Furthermore, (72) in Fig. 16B is a nut portion that is used for fixing after linking with the (69), but the types of shape, structure, and material thereof are not limited as long as the conditions of the present invention are satisfied.

Fig. 16C is an example of a simplified diagram in which a stopper for linking is formed at a distal end of the shaft for linking according to claim 2, and because of the shaft for rotation (68') in which the tip provided in the arm for linking (68) is circular cylindrical in shape, and the stopper (70) for fixing that performs a rotational movement around the shaft (71), the fixing of the arm linked with the adjacently-installed tire support portion that has a hole for installation to and removal from the shaft (68') for linking is performed from both sides shown by the (68) and (70).

Fig. 16D is used for fixing, and is a diagram in which the arm (70) for linking that is described in Fig. 16C is seen from the side, and the arm (70) performs a rotational movement in the direction of the arrow by the rotational axis (71), and the arm (70) that passes through the upper and lower direction of the figure includes the hole (70") for passing through the fastener for fixing according to the present invention.

The method of fixing the rotational axis used in the present invention may be installation or removal of a fixing object from the tip of the shaft, or fixing by a structure for fixing that is provided in the arm for linking and the tire support and the types are not limited.

The rotational axis according to the present invention shows a structure that acts as the center of a movement (see Kojien which is a single-volume Japanese dictionary), that is, the center that enables a rotational movement, and the rotational axis can be provided in the tire support portion and the arm for linking, and the types are not limited.

Fig. 17A shows an example of a simplified diagram of a structure for linking the tire support portions that can be used in the tire support according to the present invention, (73) and (73') are arm portions having a rotational axis portion that link with both ends of the tire support portions, thus serving as separate blocks, the (73) is a cylindrical arm having a projection of a stopper that prevents the (73) from falling out, and slides inside the arm (73'), and the arm-like linking device is such that the blocks of the tire support portions can be brought close through a rotational movement by which the distance between the tire support portions is not separated above a fixed value and the increase in the circumference of the tire support portions above a fixed value can be prevented.

Fig. 17B shows an example of a simplified diagram of a tire support portion that can be used in the tire support according to the present invention, (74) and (74) are arm portions having a rotational axis portion that link with both ends of the tire support portions, thus serving as separate blocks, the (74) and (74) are linked by a rotational axis (75), and an arm portion for linking is shown that enables the linked shape of the arm to be indented in the circumferential direction of the tire support, without changing the distance between the tire support portions at the time of installation and removal.

The arm for linking that is linked to another tire support portion by a rotational axis as seen in Fig. 17 may be in the shape of a wire, sheet, or chain as long as the conditions of the present invention are satisfied, and as long as the conditions according to the claims of the present invention are satisfied, the type of the structure and material are not limited.

Fig. 18A shows an example of a simplified diagram when the tire support portion that can be used in the present invention is seen from a direction perpendicular to the axle shaft, which is an example of a case when the tire support portion (3) and the tire support portion (3) come closer to each other in the direction of the arrow due to the rotational movement of the arm and partial overlapping occurs, and various types are possible as long as the conditions of the present invention are satisfied, such as a device for installation and removal may be provided in the tire support portions, and the tire support portions may be linked through a surface that is configured in a complex manner.

Fig. 18B is an example of a simplified diagram of a cross-section of a tire support portion as seen from a direction perpendicular to the axle shaft that can be used in the present invention, which shows a structure for support (76) that is provided in the tire support portion (3) used during a tire puncture, and that is positioned near the outer periphery of the tire and keeps the distance between the right and left of the tire support portion, and a structure for support (76') that supports the right and left surface near the wheel rim of the tire support portion in the space between the wheel rim.

Fig. 19 shows a simplified diagram of an example of a structure that can be used in the present invention, Fig. 19A is a fastener that can be used in Fig. 7F, Fig. 19B is seen from a direction perpendicular to Fig. 19A, (77) is a projecting portion that serves to lock the bolt formed in the same plate as the (26), the (32) is a bolt, and the structure is such that the bolt does not rotate easily as a hexagonal bolt is fixed by a hexagonal groove present inside the projection formed in the plate.

The type of the structure is not limited, and may be such that the bolt and plate are adhered or welded, or the rotation with respect to another bolt and the bolt is prevented.

Fig. 19C is a fastener that can be used in Fig. 7I, for example, and Fig. 19D shows that the portion near Fig. 19C is viewed from above, (78) is a linking unit for sliding that works in the same way as the linking unit for sliding the (8), (78') is a switch for stopper that performs a rotational movement in the direction of the arrow by working with a movable stopper (79), provided in the (78), that slides in the direction of the arrow, and (80) is a guide for sliding the linking portion for sliding in the same manner as the (7') near the (3) of Fig. 7I.

Fig. 19E shows a simplified diagram of an example of a movable unit that links with the linking unit for sliding (78), for example, and then links with the guide having a shape as shown in Fig. 2A, Fig. 2B, and Fig. 2C, (81') is a linking unit for linking with Fig. 2A, Fig. 2B, and Fig. 2C, (82) is a linking unit for linking with the linking unit for sliding, such as the (78), (81) shows a movable part of the linking unit for sliding that can move in the direction of the arrow by being formed integrally with the (81') and being sandwiched in a hemispherical groove (82) on the right and left, and is the same as a ball joint, and in addition to a direction that is parallel or almost parallel to the axle shaft according to the conditions of claim 1, the movable part can be used as a guide by slightly changing the orientation.

As long as the movable part of the linking unit of the guide can always perform the movement and fixing of the tire support portions of the predetermined direction components described in claims of the present invention, the type is not limited, and it can additionally perform other functions as well.

Fig. 20 shows a simplified diagram of an example of a guide used in the present invention, Fig. 20A is a diagram in which a groove-shaped guide for rail for sliding that can be formed in the tire support according to claim 1 or claim 2 is shown partially from the oblique upside, and (83) is a guide that operates in a manner similar to the (7).

Fig. 20B shows a projection-shaped linking unit having a shape that can be fitted in the rail according to claim 1 or claim 2 of the present invention, and (84) is a linking unit that slides inside the (83) as a guide.

Fig. 20C shows an example of a simplified diagram in which Fig. 2G is made of a plurality of divided units, (85) is an arm for linking, being linked with (86), (86'), and (86") by a rotational axes, and any one or all of the (86), (86'), and (86") include a guide having a sliding function according to claim 1, which is described in Fig. 2 or which is similar to that described in Fig. 2, and the mechanism for installation and removal that is described in claim 2 may be provided at any location of Fig. 20C, and the types are not limited as long as the conditions of claim 2 are satisfied.

Furthermore, the mechanism for installation and removal according to claim 2 may be the same as those used in other claims, such as Fig. 4, Fig. 5, Fig. 8, or Fig. 19, and the types are not limited.

Fig. 20D shows a simplified diagram of an example of a portion of the rail guide for sliding that has a pillar shape according to claim 1 or claim 2 of the present invention, a pillar-shaped guide for rail (83') that can be installed in a direction that is parallel or almost parallel to the axle shaft is installed directly on the tire support portion (3), and if the tip of the guide has a turned-back portion such that the movable portion in which the (83') is slid and moved does not come off, the guide becomes the one according to claim 1, and if there is no turned-back portion such that the movable portion can come off, the guide becomes the one according to claim 2.

Fig. 20E shows a simplified diagram of an example of a rail guide for sliding having a pillar shape according to claim 1 of the present invention, the pillar-shaped guide for rail (83') that can be installed in a direction that is parallel or almost parallel to the axle shaft is installed on the tire support portion (3) through a fixing arm (83''), and therefore, a hole-shaped linking unit (84') for linking and sliding, which has a shape so as to fit into the pillar-shaped guide for rail according to claim 1 passes through the (83'), and slides and moves in the direction of the arrow with the (83') as a guide.

Fig. 21 is an example of a simplified diagram including a tire support component that can be used in the present invention, Fig. 21A is a diagram of the portion near the tire support portion that is mounted at the end, and that has a circular shape due to linkage of the tire support portions (3) on both sides through the arms (87) and (87') for linking, and while the tire support portion is fitted by being made to perform a rotational movement in the direction of the arrow, the tire support portions can be linked so as to contact each other by making the tire support portions installed at the end to have a curved surface as shown in the figure.

Furthermore, in Fig. 21A, the (87) is linked with the tire support portion (3) through the rotational axis (88) according to claim 1, and the two (87') are linked through the three rotational axes (88') according to claim 1.

Fig. 21 (B) is different from Fig. 21A in that all tire support portions (3) are installed directly through a rotational axis (89) and the pin for linking and fixing (90) according to claim 1, and the shape of the curved portion of the joining surface between the tire support portions may be a straight surface, or may be an indented surface such as Fig. 12C and Fig. 18A, and the types of the shape, structure, and material are not limited as long as the conditions according to the claims of the present invention are satisfied, and the tire support portions can be linked in any arbitrary shape.

Furthermore, in Fig. 21, six tire support portions form a ring-shaped tire support through linking, and the number of the tire support portions to be divided could be four or five, or even more than seven, or less, and the types are not limited similar to the tire support portions of other figures described in the description.

Fig. 21C shows a simplified diagram in which the inner edges of Fig. 21(B) are almost the same as a dotted line (91) indicating the inner edges of the tire, or may be toward the outer periphery of the tire from the inner periphery of the tire, Fig. 21(D) is a simplified diagram showing the portion near adjacent tire supports (3) having a pin for fixing (90) for fixing the tire support portion at the end when the tire support used during a tire puncture is inserted inside the space which of the tire the air is pumped into, Fig. 21(E) is a simplified diagram showing the portion near adjacent tire supports (3) having a rotational axis (89) according to claim 1 that slides in the direction of the arrow, and when the tire support has the structure described in Fig. 21(D) and Fig. 21(E) or a structure similar to Fig. 18(A), the components of the tire support used during a tire puncture can be partially moved to the side of the axle shaft from the inner edges of the tire, and deformed slightly.

In Fig. 21D and Fig. 21E, the tire support portions according to the present invention are arranged in a zig-zag manner, but if the tire support portions (3) are arranged close to each other without leaving any space in between, the impact due to the level difference of the joints during the rotation of the wheel can be reduced, and the area of the installation portion of the tire support portions (3) on the inner surface of the tire during a puncture can be increased as shown in Fig. 12, therefore, the differences in the contact portion due to a zig-zag shape can be adjusted.

Fig. 22 shows an example of a simplified diagram of a gripping portion according to claim 3 of the present invention, Fig. 22A is a diagram in which the tire support is seen from the side of the axle shaft of the tire toward the outer direction of the tire, (92) is a depressed area for gripping, and the (92) can be made to perform a sliding movement according to the conditions of the present invention by holding by hand and moving in the direction of the arrow.

Fig. 22B is a simplified cross-sectional view in which Fig. 22A is seen from the side of the axle shaft, and the tire support portions (3) can perform a rotational movement according to claim 1 through the shaft (93).

Fig. 22C is an example of a simplified diagram when the tire support portions according to claim 3 are seen from the side of the axle shaft, and with regard to the depressed area (92) for gripping that is formed in the tire support portions (3), (94) is a handle for gripping that is installed on top of the depressed area (92), that is, near the side of the axle shaft, (92') is a turned-back gripping portion that is installed as a lid covering a part of the top of the depressed area (92), that is, a portion close to the side of the axle shaft, and when the (94) is held with one hand, and the other hand is used to grip (92') and pull out the (3) in the direction of the arrow, the structure can be used for gripping in order to install the tire support.

Fig. 22D and Fig. 22E show an example of a simplified diagram of a cross-section in which Fig. 22C is cut in a direction parallel to the axle shaft, and when the tire support portion is moved by holding the grip (94) or (92'), the effect according to the claims of the present invention is realized, and for the type of the shape, structure, and material of the grip, there are no limitations as long as the conditions of the present invention are satisfied.

Fig. 23 shows an example of a simplified diagram of the tire support according to the present invention, and the linking unit (8) that moves the guide for sliding (7) present in each divided tire support portion (3) is linked by a pillar-shaped linkage (95), and the effect of satisfying the conditions according to claim 1 is realized.

Furthermore, (96) of Fig. 23 is a projection for fixing the adjacent tire support portions that is directly fixed and installed on the tire support portion (3), and is the tire support that is fixed in the end by forming the tire support portions (3) opposite to the mechanism of Fig. 4.

Fig. 24 shows a simplified diagram of an example of a mechanism for fixing the tire support portions according to claim 6 of the present invention, Fig. 24A is a diagram in which the tire support portions are seen from an extending direction of the axle shaft, Fig. 24B is a diagram in which the portion close to (97) of Fig. 24A is seen from the side of the axle shaft toward the outer circumferential direction of the tire, Fig. 24 (C) is a diagram in which Fig. 24B is seen from a direction perpendicular to the axle shaft, Fig. 24D is a diagram in which the portion close to (98) of Fig. 24A is seen from the side of the axle shaft toward the outer circumferential direction of the tire, the stopper (97) that is stored in the stopper storage space (99) provided in the tire support portion (3Y) and has a projection for fixing is linked with a movable arm for linking (98) that has a hole at the tip for facilitating the insertion of the projection for fixing of the (97), and is stored in the storage space (99') of the arm for linking according to claim 6 that is provided in another tire support portion (3X), and the arm (87) for linking according to the present invention that links the tire supports (3X) and (3Y) is assisted to be able to further strengthen linking the tire support portions (3).

Furthermore, in Fig. 24, "a guide (99') for sliding in a direction parallel to the tire circumferential direction or a direction that is almost parallel to the tire circumferential direction" according to claim 6 enables the movement of the arm along the space provided inside the (3X), and the type of the guide for performing a sliding movement of the movable arm for linking (98) is not limited, and the guide can be a type in which almost the entire arm for linking (98) is packaged inside, or of a type in which a part of the arm for linking is linked and slid.

Furthermore, the (97) and (98) can move in the direction of the arrow along a guide (100) for sliding of the switch for the stopper that is provided in the tire support (3), in the surface at the side of the axle shaft of the tire support portion.

Fig. 25 shows a simplified diagram of an example of a mechanism for fixing the tire support portions according to claim 5 of the present invention, Fig. 25A is a simplified diagram of the tire support portion when the tire support portion according to claim 5 is seen from the side, and Fig. 25B is a simplified diagram of the tire support portion when the tire support portion according to claim 5 is seen from the side of the axle shaft.

Fig. 25 shows that when "an arm (102) for linking the tire support portions that is made of a pillar or a plate", which is linked with "a rotational axis (101) in which a shaft around which a rotational movement is performed, the shaft being installed in a direction perpendicular to the axle shaft or in a direction that is almost perpendicular to the axle shaft", provided in a cavity (103) inside the tire support portion (3X) according to claim 5, performs a rotational movement in the direction of the arrow, the tire support portions are linked by "a space (104) made of a hole or a groove for fixing, where insertion or linkage is performed for linking with the joint of the arm for the purpose of linking the tire support portions" provided in the tire support portion (3Y).

Fig. 26 shows an example of a simplified diagram of a tire support according to claim 7 of the present invention, Fig. 26A is a simplified diagram in which a wheel rim supporting a tire similar to that in Fig. 14B is seen from the side, Fig. 26B is a simplified diagram in which a wheel rim that is fixed by sandwiching between wheel rims on both the sides for supporting the tire, similar to that in Fig. 14B is seen from the side, Fig. 26C is a simplified diagram in which a packing sandwiched between Fig. 26A and Fig. 26B for preventing the air inside the tire from escaping is seen from the side, and Fig. 26D shows a partial view of the positional relationship between the wheel rim and packing according to claim 7.

(105) is a projecting portion provided in the (57) through which a bolt (106) can be passed and fixed, (105') is a groove provided in the (57') in which the (105) is inserted and fixed, and (106') is a threaded hole in which the screw (106) is inserted and fixed.

(107) is a hole through which the (105), which is provided in the packing (60) is passed, and the hole is brought in close contact with the (57) and (57') by pushing against them.

The examples mentioned above are provided merely to explain the present invention, and there is completely no limitation on the types of the embodiments such as shape, material, and structure as long as they are within the scope of the claims of the present invention.

Fig. 27 shows an example of a simplified diagram of a tire support according to claim 6 of the present invention, Fig. 27A is a diagram in which the tire support according to claim 6 is seen from the side, Fig. 27B is a diagram in which the arm for sliding (98) in the circumferential direction of the tire according to claim 6 is seen from the side of the axle shaft, and Fig. 27C is a diagram in which a stopper for the (98) is seen from a direction perpendicular to the axle shaft.

Fig. 27 shows a case when the method of fixing the sliding arm of Fig. 24 is changed, and is an example of fixing in which a fixture (109) is inserted in the hole (108) provided in the (98) of one tire support (3X), and a bolt is passed through a hole (110) for passing the bolt that is provided in (109) at the side of another tire support (3Y).

The types of the shape, structure, and material according to claim 4, claim 5, or claim 6 are not limited as long as the conditions of each claim are satisfied.

Fig. 28 is an example of a simplified diagram of the tire support portion components that can be used in the present invention, Fig. 28A shows a cross-sectional view in which Fig. 2A performs a back and forth motion in the direction of the arrow, and the rotational axis can perform a sliding movement as well as a rotational movement.

Fig. 28B shows a case when Fig. 28A does not perform a sliding movement, but performs only a rotational movement, and is a mechanism that is the same as the (10).

The types of the device for fixing the arm for linking according to the claims of the present invention are not limited as long as the arm can be fixed reliably.

A device for installation and removal may be provided in the tire support portions, or the tire support portions may be linked through a complex surface, and thus, as long as the conditions of the present invention are satisfied, the types are not limited.

As for the types of fasteners used in the present invention, various types can be used without any limitation.

As for the valve for injecting air that can be used in the wheel rim according to the present invention, a valve that is used generally in a wheel rim can be used, and the types of the material, structure, and material are not limited.

As for a mechanism for easy flow of air inside the tire from the wheel rim in the tire support according to the present invention, a mechanism similar to that described in Japanese Published Unexamined Patent Application No. 2010-131095 can be used, and there are no limitations of the type.

As long as the structure according to claim 1 is used to form the tire support used during a tire puncture according to the present invention, a combination with other structures, devices, and mechanisms is optional, and there is no limitation on the type.

The embodiments of the present invention are as follows.
1. There are various types of shapes, structures, and materials of the portions configuring a wheel.
2. There are no limitations with regard to a ring-shaped structure that can be deformed and that can retain the circumferential length inside the structure of the tire support used in the present invention, and regardless of the name, a wire, carcass, chain, plate, roller, ring, mesh, link chain, net, cloth, bead, belt, string, breaker, spring, crawler, caterpillar, block, and the like can be used as long as the shape of the ring is such that it can be deformed and the circumferential length can be retained.
3. The type of shape of the groove and hole provided in the wheel is not limited as long as the conditions according to the present invention are satisfied.
4. The types are varied, such as integration of the tire support according to the present invention with a packing for preventing air in the tire from escaping, or combination with an air-pressure sensor and as long as the conditions according to the present invention are satisfied, the types are not limited.
5. Several tire support components are linked to form the ring shape of the tire support according to the present invention, but the method of fixing used during linking the tire support portions according to the present invention, and the type, structure, shape, and quantity of the fasteners and linking units are diverse and not limited as long as the conditions of the present invention are satisfied.
6. The wheel according to the present invention may be combined together with the description provided in Japanese Published Unexamined Patent Application No. 2010-131095, or may be combined with other functions, devices, or structures, and the combination is diverse and there is no limitation on such types.

### Description of Reference Numerals

1: Wheel, 2: Axle shaft, 3, 3a, 3b, 3X, 3Y: Divided tire support portion used during tire puncture, 3': Ring-shaped tire support, 3": Hollow space, 4: Guide having cylindrical inner shape, 5: Columnar guide, 6: Cylindrical-shaped columnar guide, 7: Groove-shaped guide provided on tire support portion, 7': Hole space of guide, 8: Linking unit for sliding, 9: Linking arm, 9': Rotational axis of claim 1, 10, 10': Rotational axis for rotational movement in axle shaft direction, 11: Rotational axis for linking arms for linking, 12: Arm for linking, 12': Holes provided on both sides of arms for linking, 13: Arm for linking, 13': Hole provided on arm for linking, 14: Projection for sliding and moving, 15, 15', 15", 15'''': Mechanism for linking, 15''': Grip for switch, 16: Spring, 17: Projection for installation and removal, 18: Space for installation and removal, 19: Movable projection for back and forth motion, 20: Circular cylindrical bar guide, 21, 22: Cylindrical-shaped guide, 23: Bar-like guide, 8': Linking unit, 23': Guide, 24: Movable projection for back and forth motion, 25: Hole-shaped space, 26: Plate, 27: Guide, 8L, 8R: Linking portion with guide, 29: Bolt, 29': Threaded bolt portion provided at tip of 47, 30: Lock nut, 31: Real nut, 32: Bolt, 33: Plate, 34: Hole provided on 33, 35: Linking unit, 36: Guide, 37: Projection on which bolt is joined, 38: Bolt, 39: Washer, 40: Grip for switch, 40': Hole, 41: Tire support part, 41': Groove provided in 41, 41": Hole, 42: Bolt, 43: Tire support portion, 44: Block for preventing sliding, 45: Stopper, 46: Arm for linking, 47: Projection provided on tire support, 48: Hole provided on tire support, 48': Groove provided for passing through projection for linking, 49: Axis for enabling rotational movement and sliding movement in claim 1, 50: Arm for linking, 50': Hole for fixing projection provided in 50, 51, 52: Hook for linking, 53: Rotational movement axis for linking, 54: Structure for support, 55: Wire, 56, 56', 56": Carcass, 57: Wheel rim, 57': Wheel rim portion for linking, 58: Tire support portion, 59: Tire support fixing portion, 60: Packing, 61: Arm component, 62, 62': Arm fixing unit, 63, 63': Guide for fixing, 61: Arm component for linking, 62: Arm fixing unit, 63: Guide for fixing, 62': Arm fixing unit, 63': Guide for sliding, 65: Projection device for installation and removal, 66: Space for installation and removal of 65, 65': Movable projection, 66': Groove for inserting and fixing 65', 67: Structure for fixing, 68: Arm for linking, etc., and taper-shaped rotational axis, 68': Shaft, 69: Arm for linking provided with taper-shaped hole, 70: Portion for linking, 70': Hole for fastener, 70": Hole for fastener, 71: Rotational axis for portion for linking, 72: Nut portion for fixing, 73, 73': Sliding type arm for linking, 74: Arm component for performing rotational movement, 75: Rotational axis, 76: Structure for support near outer circumference of tire, 76': Structure for support between wheel rim, 77: Bolt locking structure, 78: Linking unit for sliding, 78': Switch for stopper, 79: Movable stopper, 80: Guide for sliding, 81: Movable part of linking unit for sliding, 81': Linking unit with guide, 82: Linking unit with linking unit for sliding, 83: Guide, 83': Pillar-shaped rail guide for sliding, 83": Arm for fixing, 84: Linking unit, 84': Linking unit provided with hole, 85: Arm for linking, 86, 86', 86": Rotational axis, 87, 87': Arm for linking, 88, 88': Rotational axis, 89: Rotational axis according to claim 1, 90: Pin for linking and fixing, 91: Inner edges of tire, 92: Depressed area for gripping, 92': Turned-back lid for gripping, 93: Rotational axis, 94: Handle for gripping, 95: Linkage, 96: Projection for fixing, 97, 98: Sliding-type arm for linking according to claim 6, 99, 99': Storage space for arm for sliding, 100: Guide for sliding for stopper switch, 101: Rotational axis, 102: Arm for linking, 103: Cavity inside tire support portion, 104: Space made of hole or groove, 105: Projecting portion provided in 57, 106: Bolt, 105': Groove provided in 57', 106': Hole for inserting screw, 107: Hole provided in packing, 108: Hole provided in arm for sliding, 109: Fixture used for arm for sliding, 110: Hole provided in fixture

## Claims

1. A tire support used during a tire puncture,
wherein the support is ring-shaped and it is usable to be brought in contact with the inner surface of a punctured tire in a ring-shaped space enclosed by the tire and the rim of a wheel, wherein
the ring-shaped tire support used during a tire puncture is configured by tire support portions (3) formed by splitting up the ring into two or more units, and joints that link the divided tire support portions,
wherein the joints that link the divided tire support portions (3) each include:
a guide for sliding that performs a back and forth motion and is made of a groove-shaped guide for rail (7) and a projection-shaped linking unit (8) for linking and sliding that has a shape which fits into the groove-shaped guide for rail, which are provided for the purpose of moving and fixing the adjacent divided tire support portions (3) in a direction parallel to an axle shaft, and can be installed in a direction parallel to the axle shaft;
or a guide for sliding that performs a back and forth motion and is made of a pillar-shaped guide for rail (5) and a hole-shaped linking unit (4) for linking and sliding that has a shape which fits into the pillar-shaped guide for rail, which are provided for the purpose of moving and fixing the adjacent divided tire support portions (3) in a direction parallel to the axle shaft, and can be installed in a direction parallel to the axle shaft,
**characterized in that**
each of the joints further includes:
a rotational axis for linking the tire support portions, that is made of a shaft (10, 10', 21, 22) installed in a direction parallel to the axle shaft for the purpose of keeping the distance between adjacent divided tire support portions, and for rotational movement of the tire support portions;
wherein at least one shaft (10, 10', 21, 22) installed in the direction parallel to the axle shaft, which is included in the joints includes:
a shaft (10) through which an arm for linking (9) is linked and that performs a rotational movement in the same direction as the axle shaft; or
a shaft (10) that performs a rotational movement and that is provided in the side opposite to the side wherein a hole (11) is formed, which hole (11) is one for a rotational axis for linking and fixing the rotational axis for linking with an arm for linking (9) provided in another divided tire support portion; or
a linking unit (8') that is fixed to the tire support portion (3) and that is joined in a guide (23) that stretches; or
a projection-shape linking unit (8) for sliding in a guide (7') provided in the tire support portion (3); or
a guide (27, 36) for sliding provided in a plate (26, 33) which is inside the tire support portion (3); or
a projection-shape linking unit (8) for sliding in a guide (7') provided in a plate (26, 33) which is inside the tire support portion (3); or
a rotational movement axis for linking (53) that passes through a hole (51') formed in a hook for linking (51) which is provided on the tire support portion (3) and that passes through a hole (52') formed in a hook for linking (52) which is provided on the another tire support portion (3).

2. The tire support used during a tire puncture according to claim 1, wherein the guide for sliding that performs a back and forth motion for the purpose of linking by sliding in the direction that is parallel to the axle shaft includes
a mechanism for installation and removal of the divided tire support portions (3) in which (83, 84) turned-back parts of the guide for sliding have been removed.

3. The tire support used during a tire puncture according to claim 1 and claim 2, wherein the surface facing the side of the axle shaft, of the tire support (3) during a tire puncture includes grips (94, 92'), or a groove (92) or hole for gripping.

4. The tire support that is used during a tire puncture, according to claim 1, where one of the tire circumferential directions of the tire support portions (3) of the divided tire suppport is a joint of the divided tire support portions, in the joint for linking the tire support portions (3) configured at the side opposite, in the tire circumferential direction, of the joints between the above-described tire support portions (3), wherein
another joint that is opposite the joint described in claim 1 with respect to the tire circumferential direction in any one of the divided tire support portions (3X) of the tire support (3) includes an arm (61) for linking the tire support portions that is made of a pillar or a plate having a rotational axis in which a shaft around which a rotational movement is performed, the shaft being installed in a direction parallel to the axle shaft,
alternatively,
another joint that is opposite the joint described in claim 1 with respect to the tire circumferential direction in any one of the divided tire support portions (3X) of the tire support (3) includes a projection (65) for linking the tire support portions (X) and the tire support portions (Y) through the rotational movement of the tire support portions (3X) or the tire support portions (3Y) that are adjacent to the (3X) around a shaft installed in a direction parallel to the axle shaft,
and in the adjacent divided tire support portion (3Y) that is linked with the divided tire support portion (3X), there is included a space (66) made of a hole or a groove for fixing, where insertion or linkage is performed for linking with the joint of the arm (61) or the projection (65) for the purpose of linking the tire support portions.

5. The tire support that is used during a tire puncture, according to claim 1, where one of the tire circumferential directions of the tire support portions (3) of the divided tire support is a joint of the divided tire support portions, in the joint for linking the tire support portions (3) configured at the side opposite, in the tire circumferential direction, of the joints between the above-described tire support portions (3), wherein
another joint that is opposite the joint according to claim 1 in any one of the divided tire support portions (3X) of the tire support (3) includes an arm (102) for linking the tire support portions that is made of a pillar or a plate having a rotational axis (101) in which a shaft around which a rotational movement is performed, the shaft being installed in a direction perpendicular to the axle shaft, and
in the adjacent divided tire support portion (3Y) that is linked with the divided tire support portion (3X), there is included a space (104) made of a hole or a groove for fixing, where insertion or linkage is performed for linking with the joint of the arm for the purpose of linking the tire support portions.

6. The tire support that is used during a tire puncture, according to claim 1, where one of the tire circumferential directions of the tire support portions (3) of the divided tire support is a joint of the divided tire support portions, in the joint for linking the tire support portions (3) configured at the side opposite, in the tire circumferential direction, of the joints between the above-described tire support portions (3), wherein
another joint that is opposite the joint described in claim 1 in any one of the divided tire support portions (3X) of the tire support (3) includes a guide (99') for sliding in a direction parallel to the tire circumferential direction, and an arm (87) for linking the tire support portions that is made of a movable pillar or a plate installed in the guide (99') for sliding, and
in the adjacent divided tire support portion (3Y) that is linked with the divided tire support portion (3X), there is included a space (99) made of a hole or a groove for fixing, where insertion or linkage is performed for linking with the joint of an arm (98) for the purpose of linking the tire support portions.

7. A wheel for coping with a tire puncture, on a circumference that is perpendicular to the axle shaft at the side of the tire of the wheel rim or wheel disc, includes
an indented structure portion (59) for sandwiching the tire support during a tire puncture as set forth in claim 1 to claim 6.

## Patentansprüche

1. Reifenträger, der während einer Reifenpanne verwendet wird, wobei der Träger ringförmig und verwendbar ist, um mit der inneren Fläche eines durchstochenen Reifens in einem ringförmigen Raum, der von dem Reifen und der Felge eines Rads umschlossen ist, in Kontakt gebracht zu werden, wobei der ringförmige Reifenträger, der während einer Reifenpanne verwendet wird, durch Reifentragabschnitte (3), die durch Aufteilen des Rings in zwei oder mehr Einheiten gebildet sind, und Verbindungen, welche die geteilten Reifentragabschnitte verbinden, eingerichtet ist,
wobei
die Verbindungen, welche die geteilten Reifentragabschnitte (3) verbinden, jeweils aufweisen:
eine Führung zum Gleiten, die eine Vorwärts- und Rückwärtsbewegung vollzieht und aus einer nutförmigen Führung für eine Schiene (7) und einer vorsprungförmigen Verbindungseinheit (8) zum Verbinden und Gleiten, die eine Form aufweist, die in die nutförmige Führung für eine Schiene passt, gebildet ist, die zum Zweck eines Bewegens und Befestigens der benachbarten geteilten Reifentragabschnitte (3) in einer Richtung parallel zu einer Achswelle vorgesehen sind und in einer Richtung parallel zu der Achswelle installiert werden können;
oder eine Führung zum Gleiten, die eine Vorwärts- und Rückwärtsbewegung vollzieht und aus einer säulenförmigen Führung für eine Schiene (5) und einer lochförmigen Verbindungseinheit (4) zum Verbinden und Gleiten, die eine Form aufweist, die in die säulenförmige Führung für eine Schiene passt, gebildet ist, die zum Zweck eines Bewegens und Befestigens der benachbarten geteilten Reifentragabschnitte (3) in einer Richtung parallel zu der Achswelle vorgesehen sind und in einer Richtung parallel zu der Achswelle installiert werden können,
**dadurch gekennzeichnet, dass**
jede der Verbindungen aufweist:
eine Drehachse zum Verbinden der Reifentragabschnitte, die aus einer Welle (10, 10', 21, 22) gebildet ist, die in einer Richtung parallel zu der Achswelle zum Zweck eines Haltens des Abstands zwischen benachbarten geteilten Reifentragabschnitten installiert ist, und zur Drehbewegung der Reifentragabschnitte;
wobei mindestens eine Welle (10, 10', 21, 22), die in der Richtung parallel zu der Achswelle installiert ist, die in den Verbindungen enthalten ist, aufweist:
eine Welle (10), durch die ein Arm zum Verbinden (9) verbunden ist und die eine Drehbewegung in der gleichen Richtung wie die Achswelle vollzieht; oder
eine Welle (10), die eine Drehbewegung vollzieht und die in der Seite gegenüber der Seite vorgesehen ist, in der ein Loch (11) gebildet ist, wobei das Loch (11) eines für eine Drehbewegung zum Verbinden und Befestigen der Drehachse zum Verbinden mit einem Arm zum Verbinden (9), der auf einem anderen geteilten Reifentragabschnitt vorgesehen ist, ist; oder
eine Verbindungseinheit (8'), die an dem Reifentragabschnitt (3) befestigt ist und die in einer Führung (23) verbunden ist, die sich streckt; oder
eine vorsprungförmige Verbindungseinheit (8) zum Gleiten in einer Führung (7'), die in dem Reifentragabschnitt (3) vorgesehen ist; oder
eine Führung (27, 36) zum Gleiten, die in einer Platte (26, 33) vorgesehen ist, die sich im Inneren des Reifentragabschnitts (3) befindet; oder
eine vorsprungförmige Verbindungseinheit (8) zum Gleiten in einer Führung (7'), die in einer Platte (26, 33) vorgesehen ist, die sich im Inneren des Reifentragabschnitts (3) befindet; oder
eine Drehbewegungsachse zum Verbinden (53), die durch ein Loch (51') verläuft, das in einem Haken zum Verbinden (51) gebildet ist, der auf dem Reifentragabschnitt (3) vorgesehen ist, und die durch ein Loch (52') verläuft, das in einem Haken zum Verbinden (52) gebildet ist, der auf dem anderen Reifentragabschnitt (3) vorgesehen ist.

2. Reifenträger, der während einer Reifenpanne verwendet wird, nach Anspruch 1, wobei die Führung zum Gleiten, die eine Vorwärts- und Rückwärtsbewegung zum Zweck eines Verbindens vollzieht, indem sie in der Richtung gleitet, die zu der Achswelle parallel ist, aufweist:
einen Mechanismus zur Installation und Entfernung der geteilten Reifentragabschnitte (3), in dem (83, 84) umgekehrte Teile der Führung zum Gleiten entfernt wurden.

3. Reifenträger, der während einer Reifenpanne verwendet wird, nach Anspruch 1 und Anspruch 2, wobei eine Fläche, die der Seite der Achswelle zugewandt ist, des Reifenträgers (3) während einer Reifenpanne Griffe (94, 92') oder eine Nut (92) oder ein Loch zum Greifen aufweist.

4. Reifenträger, der während einer Reifenpanne verwendet wird, nach Anspruch 1, wobei eine der Reifenumfangsrichtungen der Reifentragabschnitte (3) des geteilten Reifenträgers eine Verbindung der geteilten Reifentragabschnitte ist,
in der Verbindung zum Verbinden der Reifentragabschnitte (3), die an der Seite, in der Reifenumfangsrichtung, gegenüber den Verbindungen zwischen den vorangehend beschriebenen Reifentragabschnitten (3) eingerichtet ist, wobei
eine andere Verbindung, die der in Anspruch 1 beschriebenen Verbindung in Bezug auf die Reifenumfangsrichtung gegenüberliegt, in einem beliebigen der geteilten Reifentragabschnitte (3X) des Reifenträgers (3) einen Arm (61) zum Verbinden der Reifentragabschnitte aufweist, der aus einer Säule oder einer Platte mit einer Drehachse gebildet ist, in der eine Welle, um die eine Drehbewegung vollzogen wird, wobei die Welle in einer Richtung parallel zu der Achswelle installiert ist,
wobei alternativ
eine andere Verbindung, die der in Anspruch 1 beschriebenen Verbindung in Bezug auf die Reifenumfangsrichtung gegenüberliegt, in einem beliebigen der geteilten Reifentragabschnitte (3X) des Reifenträgers (3) einen Vorsprung (65) zum Verbinden der Reifentragabschnitte (X) und der Reifentragabschnitte (Y) durch die Drehbewegung der Reifentragabschnitte (3X) oder der Reifentragabschnitte (3Y) aufweist, die zu den (3X) um eine Welle benachbart sind, die in einer Richtung parallel zu der Achswelle installiert ist, und in dem benachbarten geteilten Reifentragabschnitt (3Y), der mit dem geteilten Reifentragabschnitt (3x) verbunden ist, ein Raum (66) enthalten ist, der aus einem Loch oder einer Nut zum Befestigen gebildet ist, wobei ein Einsetzen oder eine Anbindung zum Verbinden mit der Verbindung des Arms (61) oder des Vorsprungs (65) zum Zweck eines Verbindens der Reifentragabschnitte durchgeführt wird.

5. Reifenträger, der während einer Reifenpanne verwendet wird, nach Anspruch 1, wobei eine der Reifenumfangsrichtungen der Reifentragabschnitte (3) des geteilten Reifenträgers eine Verbindung der geteilten Reifentragabschnitte ist,
in der Verbindung zum Verbinden der Reifentragabschnitte (3), die an der Seite, in der Reifenumfangsrichtung, gegenüber den Verbindungen zwischen den vorangehend beschriebenen Reifentragabschnitten (3) eingerichtet ist, wobei
eine andere Verbindung, die der Verbindung nach Anspruch 1 gegenüberliegt, in einem beliebigen der geteilten Reifentragabschnitte (3X) des Reifenträgers (3) einen Arm (102) zum Verbinden der Reifentragabschnitte aufweist, der aus einer Säule oder einer Platte mit einer Drehachse (101) gebildet ist, in der eine Welle, um die eine Drehbewegung vollzogen wird, wobei die Welle in einer Richtung senkrecht zu der Achswelle installiert ist, und
in dem benachbarten geteilten Reifentragabschnitt (3Y), der mit dem geteilten Reifentragabschnitt (3x) verbunden ist, ein Raum (104) enthalten ist, der aus einem Loch oder einer Nut zum Befestigen gebildet ist, wobei ein Einsetzen oder eine Anbindung zum Verbinden mit der Verbindung des Arms zum Zweck eines Verbindens der Reifentragabschnitte durchgeführt wird.

6. Reifenträger, der während einer Reifenpanne verwendet wird, nach Anspruch 1, wobei eine der Reifenumfangsrichtungen der Reifentragabschnitte (3) des geteilten Reifenträgers eine Verbindung der geteilten Reifentragabschnitte ist,
in der Verbindung zum Verbinden der Reifentragabschnitte (3), die an der Seite, in der Reifenumfangsrichtung, gegenüber den Verbindungen zwischen den vorangehend beschriebenen Reifentragabschnitten (3) eingerichtet ist, wobei
eine andere Verbindung, die der in Anspruch 1 beschriebenen Verbindung gegenüberliegt, in einem beliebigen der geteilten Reifentragabschnitte (3X) des Reifenträgers (3) eine Führung (99') zum Gleiten in einer Richtung parallel zu der Reifenumfangsrichtung und einen Arm (87) zum Verbinden der Reifentragabschnitte, der aus einer bewegbaren Säule oder einer Platte gebildet ist, die in der Führung (99') zum Gleiten installiert ist, aufweist, und
in dem benachbarten geteilten Reifentragabschnitt (3Y), der mit dem geteilten Reifentragabschnitt (3x) verbunden ist, ein Raum (99) enthalten ist, der aus einem Loch oder einer Nut zum Befestigen gebildet ist, wobei ein Einsetzen oder eine Anbindung zum Verbinden mit der Verbindung eines Arms (98) zum Zweck eines Verbindens der Reifentragabschnitte durchgeführt wird.

7. Rad zum Bewältigen einer Reifenpanne, auf einem Umfang, das senkrecht zu der Achswelle an der Seite des Reifens der Radfelge oder Radscheibe ist, aufweisend:
einen eingekerbten Strukturabschnitt (59) zum sandwichartigen Einschließen des Reifenträgers während einer Reifenpanne nach Anspruch 1 bis Anspruch 6.

## Revendications

1. Support de pneu utilisé pendant une crevaison de pneu,
dans lequel le support est en forme d'anneau et est utilisable pour être amené en contact avec la surface intérieure d'un pneu crevé dans un espace en forme d'anneau entouré par le pneu et par la jante d'une roue, dans lequel le support de pneu en forme d'anneau utilisé pendant une crevaison de pneu est configuré par des portions de support de pneu (3) formées en divisant l'anneau en deux unités ou plus, et des jonctions qui lient les portions de support de pneu divisées,
dans lequel
les jonctions qui lient les portions de support de pneu divisées (3) comportent chacune :
un guide de coulissement qui effectue un mouvement de va-et-vient et est constitué d'un guide en forme de rainure pour rail (7) et d'une unité de liaison en forme de protubérance (8) pour une liaison et un coulissement qui a une forme qui s'adapte dans le guide en forme de rainure pour rail, qui sont prévus dans le but de déplacer et de fixer les portions de support de pneu divisées (3) adjacentes dans une direction parallèle à un arbre d'essieu, et peuvent être installés dans une direction parallèle à l'arbre d'essieu ;
ou un guide de coulissement qui effectue un mouvement de va-et-vient et est constitué d'un guide en forme de pilier pour rail (5) et d'une unité de liaison en forme de trou (4) pour une liaison et un coulissement qui a une forme qui s'adapte dans le guide en forme de pilier pour rail, qui sont prévus dans le but de déplacer et de fixer les portions de support de pneu divisées (3) adjacentes dans une direction parallèle à l'arbre d'essieu, et peuvent être installés dans une direction parallèle à l'arbre d'essieu,
**caractérisé en ce que**
chacune des jonctions comporte en outre :
un axe de rotation pour lier les portions de support de pneu, qui est constitué d'un arbre (10, 10', 21, 22) installé dans une direction parallèle à l'arbre d'essieu dans le but de conserver la distance entre des portions de support de pneu divisées adjacentes, et pour un déplacement en rotation des portions de support de pneu ;
dans lequel au moins un arbre (10, 10', 21, 22) installé dans la direction parallèle à l'arbre d'essieu, qui est inclus dans les jonctions comporte :
un arbre (10) par le biais duquel un bras de liaison (9) est lié et qui effectue un déplacement en rotation dans la même direction que l'arbre d'essieu ; ou
un arbre (10) qui effectue un déplacement en rotation et qui est prévu dans le côté opposé au côté dans lequel un trou (11) est formé, lequel trou (11) est un trou pour un axe de rotation pour lier et fixer l'axe de rotation pour une liaison avec un bras de liaison (9) prévu dans une autre portion de support de pneu divisée ; ou
une unité de liaison (8') qui est fixée à la portion de support de pneu (3) et qui est jointe dans un guide (23) qui s'étire ; ou
une unité de liaison en forme de protubérance (8) pour coulisser dans un guide (7') prévu dans la portion de support de pneu (3) ; ou
un guide (27, 36) de coulissement prévu dans une plaque (26, 33) qui se trouve à l'intérieur de la portion de support de pneu (3) ; ou
une unité de liaison en forme de protubérance (8) pour coulisser dans un guide (7') prévu dans une plaque (26, 33) qui se trouve à l'intérieur de la portion de support de pneu (3) ; ou
un axe de déplacement en rotation de liaison (53) qui passe à travers un trou (51') formé dans un crochet de liaison (51) qui est prévu dans la portion de support de pneu (3) et qui passe à travers un trou (52') formé dans un crochet de liaison (52) qui est prévu sur l'autre portion de support de pneu (3).

2. Support de pneu utilisé pendant une crevaison de pneu selon la revendication 1, dans lequel le guide de coulissement qui effectue un mouvement de va-et-vient dans le but de lier par coulissement dans la direction qui est parallèle à l'arbre d'essieu comporte un mécanisme d'installation et de retrait des portions de support de pneu divisées (3) dans lesquelles (83, 84) des parties retournées du guide de coulissement ont été retirées.

3. Support de pneu utilisé pendant une crevaison de pneu selon la revendication 1 et la revendication 2, dans lequel la surface tournée vers le côté de l'arbre d'essieu du support de pneu (3) pendant une crevaison de pneu comporte des éléments de préhension (94, 92'), ou une rainure (92) ou trou de préhension.

4. Support de pneu qui est utilisé pendant une crevaison de pneu, selon la revendication 1, où l'une des directions circonférentielles de pneu des portions de support de pneu (3) du support de pneu divisé est une jonction des portions de support de pneu divisées,
dans la jonction de liaison des portions de support de pneu (3) configurée du côté opposé, dans la direction circonférentielle de pneu, aux jonctions entre les portions de support de pneu (3) décrites ci-dessus, dans lequel une autre jonction qui est opposée à la jonction décrite à la revendication 1 par rapport à la direction circonférentielle de pneu dans l'une quelconque des portions de support de pneu divisées (3X) du support de pneu (3) comporte un bras (61) de liaison des portions de support de pneu qui est constitué d'un pilier ou d'une plaque ayant un axe de rotation dans lequel un arbre autour duquel un déplacement en rotation est effectué, l'arbre étant installé dans une direction parallèle à l'arbre d'essieu,
en variante,
une autre jonction qui est opposée à la jonction décrite à la revendication 1 par rapport à la direction circonférentielle de pneu dans l'une quelconque des portions de support de pneu divisées (3X) du support de pneu (3) comporte une protubérance (65) de liaison des portions de support de pneu (X) et des portions de support de pneu (Y) par le biais du déplacement en rotation des portions de support de pneu (3X) ou des portions de support de pneu (3Y) qui sont adjacentes aux (3X) autour d'un arbre installé dans une direction parallèle à l'arbre d'essieu,
et dans la portion de support de pneu divisée (3Y) adjacente qui est liée aux portions de support de pneu divisées (3X), est inclus un espace (66) constitué d'un trou ou d'une rainure de fixation, où une insertion ou une liaison est effectuée pour une liaison avec la jonction du bras (61) ou de la protubérance (65) dans le but de lier les portions de support de pneu.

5. Support de pneu qui est utilisé pendant une crevaison de pneu, selon la revendication 1, où l'une des directions circonférentielles de pneu des portions de support de pneu (3) du support de pneu divisé est une jonction des portions de support de pneu divisées,
dans la jonction de liaison des portions de support de pneu (3) configurée du côté opposé, dans la direction circonférentielle de pneu, aux jonctions entre les portions de support de pneu (3) décrites ci-dessus, dans lequel une autre jonction qui est opposée à la jonction selon la revendication 1 dans l'une quelconque des portions de support de pneu divisées (3X) du support de pneu (3) comporte un bras (102) de liaison des portions de support de pneu qui est constitué d'un pilier ou d'une plaque ayant un axe de rotation (101) dans lequel un arbre autour duquel un déplacement en rotation est effectué, l'arbre étant installé dans une direction perpendiculaire à l'arbre d'essieu, et dans la portion de support de pneu divisée adjacente (3Y) qui est liée à la portion de support de pneu divisée (3X), est inclus un espace (104) constitué d'un trou ou d'une rainure de fixation, où une insertion ou une liaison est effectuée pour une liaison avec la jonction du bras dans le but de lier les portions de support de pneu.

6. Support de pneu qui est utilisé pendant une crevaison de pneu, selon la revendication 1, où l'une des directions circonférentielles de pneu des portions de support de pneu (3) du support de pneu divisé est une jonction des portions de support de pneu divisées,
dans la jonction de liaison des portions de support de pneu (3) configurée du côté opposé, dans la direction circonférentielle de pneu, aux jonctions entre les portions de support de pneu (3) décrites ci-dessus, dans lequel une autre jonction qui est opposée à la jonction décrite à la revendication 1 dans l'une quelconque des portions de support de pneu divisées (3X) du support de pneu (3) comporte un guide (99') de coulissement dans une direction parallèle à la direction circonférentielle de pneu, et un bras (87) de liaison des portions de support de pneu qui est constitué d'un pilier mobile ou d'une plaque installé(e) dans le guide (99') de coulissement, et
dans la portion de support de pneu divisée (3Y) adjacente qui est liée à la portion de support de pneu divisée (3X), est inclus un espace (99) constitué d'un trou ou d'une rainure de fixation, où une insertion ou une liaison est effectuée pour une liaison avec la jonction d'un bras (98) dans le but de lier les portions de support de pneu.

7. Roue pour gérer une crevaison de pneu, sur une circonférence qui est perpendiculaire à l'arbre d'essieu du côté du pneu de la jante de roue ou d'un enjoliveur de roue, comporte une portion de structure indentée (59) pour enserrer le support de pneu pendant une crevaison de pneu tel que présenté de la revendication 1 à la revendication 6.
